# EUROPÄISCHE PATENTANMELDUNG

(11) **EP 4 002 615 A1**
(43) Veröffentlichungstag der Anmeldung: **25.05.2022**
(21) Anmeldenummer: 21201593.7
(22) Anmeldetag: 08.10.2021
(51) Int. Cl.: H02G 3/06, F21V 21/005, F21V 23/06, H02G 3/04

(54) **BEFESTIGUNG EINER KUPPLUNG FÜR EIN LICHTBANDSYSTEM**

(30) Priorität: 12.11.2020 DE 102020129925
(71) Anmelder: Trilux GmbH & Co. KG, 59759 Arnsberg (DE)
(72) Erfinder: Marquas, Karsten, 59757 Arnsberg (DE); Hesse, Nina, 59519 Möhnesee (DE); Drees, Frank, 58840 Plettenberg (DE)
(74) Vertreter: Lippert Stachow Patentanwälte Rechtsanwälte

(57) **Zusammenfassung**

Die Erfindung betrifft ein System zur Realisierung einer Leuchte, Bestandteile des Systems einer Leuchte und ein Verfahren zur Herstellung der Leuchte. Das System umfasst zwei Tragschienen 1, zwei in den Tragschienen 1 angeordnete Stromleitschienen, Leitungsdrähte und eine mechanische Kupplung 2 umfassend Kupplungsseitenwände 21, 22 und zumindest eine daran angeordnete, aus einer Ruhelage federelastisch auslenkbare Kratzfeder 3, die die Tragschienen 1 in einer Betriebsposition an jeweils einem ihrer Längsenden dergestalt relativ zueinander fixiert, sodass die Kratzfeder 3 in der Betriebsposition ausgelenkt ist und an zumindest einer Tragschienenseitenwand der Tragschienen 1 anliegt.

## Beschreibung

Die Erfindung betrifft ein System zur Realisierung einer in Längsrichtung langgestreckten Leuchte, eine mechanische Kupplung, eine Leuchte und ein Verfahren zur Herstellung der Leuchte.

Gattungsgemäße Systeme betreffen eine Leuchte, die in einer Längsrichtung langgestreckt ist, mehrere in Längsrichtung langgestreckte Tragschienen und insbesondere mehrere in Längsrichtung langgestreckte Montagekörper aufweist. Typischerweise dienen die Tragschienen zur Fixierung der Leuchte an einem Baukörper, beispielsweise an einer Decke. An den Montagekörpern sind üblicherweise elektrische Funktionselemente der Leuchte befestigt, beispielsweise Platinen mit LEDs, Funkmodule, elektrische Leitungen und/oder Betriebsgeräte. Bei der Montage der Leuchte wird üblicherweise zunächst die jeweilige Tragschiene an dem Baukörper befestigt und anschließend der Montagekörper, der mit zumindest einem der genannten elektrischen Funktionselemente der Leuchte bestückt ist, an der Tragschiene fixiert, sodass Tragschiene und Montagekörper einen Innenraum ausbilden, in dem wesentliche Elemente der Leuchte angeordnet sind, beispielsweise Platinen, Betriebsgeräte, Kontakteinrichtungen, etc. Typischerweise sind Tragschiene und Montagekörper jeweils in einer Längsrichtung langgestreckt ausgebildet, bevorzugt beträgt die Längserstreckung dabei zumindest das Fünffache der Erstreckung senkrecht zur Längsrichtung. Die Tragschiene weist üblicherweise einen Querschnitt senkrecht zur Längsrichtung auf, der entlang einer Vertikalrichtung an einem vertikalen Ende offen ist und entlang einer Transversalrichtung durch zwei Tragschienenseitenwände begrenzt ist, die durch einen entlang der Transversalrichtung verlaufenden Tragschienenboden miteinander verbunden sind und die sich von dem Tragschienenboden vertikal weg erstrecken. Der Tragschienenboden und die Tragschienenseitenwände bilden üblicherweise gemeinsam einen durch die Tragschienenseitenwände und den Tragschienenboden zumindest abschnittsweise umschlossenen Innenraum aus. Der Innenraum ist somit durch die Tragschiene definiert. Die Tragschiene ist üblicherweise an zumindest einem ihrer vertikalen Enden offen ausgebildet. Üblicherweise weisen beide Tragschienen, insbesondere sämtliche der Tragschienen eines Systems die vorgenannten Merkmale auf. Üblicherweise sind die beiden Tragschienen zur Ausbildung der Leuchte an ihren Längsenden miteinander verbunden. Üblicherweise bilden sie dabei einen gemeinsamen Innenraum aus, der sich zwischen den Tragschienenseitenwänden beider Tragschienen und dem Tragschienenboden beider Tragschienen langgestreckt entlang der Längserstreckung beider langgestreckter Tragschienen erstreckt. Häufig sind die beiden Tragschienen dabei mit ihren Längsenden nicht unmittelbar, sondern mittels einer mechanischen Kupplung aneinander fixiert. Üblicherweise weist jede der Tragschienen senkrecht zur Längsrichtung einen im Wesentlichen konstanten Querschnitt auf, wobei der Querschnitt bevorzugt bis auf Aussparungen und/oder Stanzungen im Tragschienenboden und/oder Tragschienenseitenwänden identisch ist. Häufig ist der Querschnitt der Tragschienen, insbesondere beider, insbesondere sämtlicher der Tragschienen im Wesentlichen gleich ausgebildet. Üblicherweise sind die Tragschienen durch die mechanische Kupplung relativ zueinander senkrecht zur Längsrichtung fixiert.

Üblicherweise wird die Tragschiene über ihren Tragschienenboden an dem Baukörper befestigt. Der Montagekörper wird üblicherweise an dem offenen vertikalen Ende der Tragschiene angeordnet, sodass der Montagekörper den durch die Tragschiene definierten Innenraum vertikal begrenzt und der Innenraum durch Tragschiene und Montagekörper senkrecht zur Längsrichtung umlaufend umschlossen ist. Zumindest in einigen Längsabschnitten kann die Umschließung des Innenraums, die durch Tragschiene und Montagekörper gebildet ist, unterbrochen sein, beispielsweise um Zugang zu dem Innenraum zu ermöglichen, beispielsweise zur Luftzufuhr. Bevorzugt ist der Innenraum über mindestens 80 %, insbesondere mindestens 90 % seiner Längserstreckung, insbesondere über seine Längserstreckung hinweg ununterbrochen durchgängig umschlossen. Der Montagekörper weist oftmals einen Querschnitt senkrecht zur Längsrichtung auf, der einen in sich Querrichtung erstreckten Montagekörperboden und an den beiden Querseiten des Montagebodens sich von dem Montagekörperboden vertikal weg erstreckende Montagekörperseitenwände umfasst. Tragschiene und Montagekörper sind üblicherweise getrennt voneinander hergestellt. Besonders bevorzugt sind Tragschiene und/oder Montagekörper üblicherweise jeweils aus einem Blech durch Umformen hergestellt. Üblicherweise ist der Montagekörper in einer Betriebsposition des Systems, in dem das System bestimmungsgemäß verwendet wird, über eine Haltefeder an Tragschienenhalteankern der Tragschiene gehalten. Im Stand der Technik sind verschiedenste Möglichkeiten zur Realisierung einer solchen Haltefeder bekannt. Üblicherweise ist die Haltefeder fest mit dem Montagekörper verbunden und weist in Transversalrichtung elastisch auslenkbare Haltevorsprünge auf. Bevorzugt sind die Tragschienenhalteanker als Vorsprünge ausgebildet.

Üblicherweise weist ein gattungsgemäßes System ferner eine Stromleitschiene auf, die zumeist aus Kunststoff hergestellt ist, insbesondere mittels Extrusionsverfahren, und die ebenfalls in Längsrichtung langgestreckt ist, also zwischen beiden ihrer Längsenden eine lang gestreckte Längserstreckung aufweist. Die Stromleitschiene ist üblicherweise an einer zum Innenraum gewandten Innenseite der Tragschiene angeordnet und an der Tragschiene fixiert, insbesondere an dem Tragschienenboden und/oder an zumindest einer der Tragschienenseitenwänden. Die Stromleitschiene erstreckt sich über einen wesentlichen Anteil der Länge der Tragschiene hinweg, insbesondere über mindestens 80 % der Längserstreckung der Tragschiene hinweg. Üblicherweise weist die Stromleitschiene mehrere entlang der Transversalrichtung nebeneinander angeordnete Kanäle auf, die zu einer Zugangsseite hin offen sind, die vom Innenraum aus zugänglich ist. Die Kanäle erstrecken sich vorzugsweise durchgehend über die gesamte Länge der Stromleitschiene. Insbesondere verlaufen die Transversalrichtung, die Längsrichtung und die Vertikalrichtung senkrecht zueinander. In der Betriebsposition des Systems ist in zumindest einigen der Kanäle jeweils ein Leitungsdraht angeordnet, und an zumindest an einem Längsende der Stromleitschiene sind die Leitungsdrähte üblicherweise mit einer externen Spannungsquelle verbunden, über die elektrische Energie und insbesondere elektrische Signale auf die Leitungsdrähte aufgebracht werden können. Hierzu ist üblicherweise an dem Längsende ein insbesondere als eine elektrische Einspeiseeinrichtung ausgebildeter elektrischer Verbinder angeordnet, der elektrisch mit den Leitungsdrähten verbunden ist. Zumeist ist an jedem Längsende der Stromleitschiene jeweils ein elektrischer Verbinder vorgesehen. Die elektrischen Verbinder können beispielsweise als zueinander korrespondierende Verbinder ausgebildet sein, beispielsweise ein erster als Stecker an ein zweiter als Buchse. Bei dem Vorsehen von zumindest einem Verbinder an zumindest einem Längsende der Stromleitschiene können in Längsrichtung benachbarte Stromleitschienen miteinander elektrisch verbunden sein, sodass die Leitungsdrähte eine Durchgangsverdrahtung bilden können.

Das System umfasst üblicherweise ferner eine Kontakteinrichtung, über die ein elektrischer Kontakt zwischen den Leitungsdrähten, die der Stromleitschiene zugeordnet sind, und zumindest einem elektrischen Funktionselement des Montagekörpers hergestellt wird.

Gattungsgemäße Systeme werden in einem breiten Anwendungsbereich eingesetzt, beispielsweise in Lagerhallen, Produktionshallen, Supermärkten oder Großraumbüros, wobei Leuchten mit einer Mehrzahl an Tragschienen und Montagekörpern zum Einsatz kommen. Das Grundprinzip der mit einem gattungsgemäßen System hergestellten Leuchten besteht darin, dass die Tragschienen die elektrische und mechanische Infrastruktur dieser Leuchten bilden, wohingegen die Montagekörper an den Tragschienen befestigt werden und die elektrischen Funktionselemente aufweisen, die in dem jeweiligen Anwendungsbereich benötigt werden. Selbstverständlich sind üblicherweise zumindest einige der elektrischen Funktionselemente als Leuchtmodule mit Leuchtmitteln ausgebildet, insbesondere umfassend LED-Platinen. Beispielsweise können alternativ oder zusätzlich auch weitere elektrische Funktionselemente an dem jeweiligen Montagekörper vorgesehen sein, wie beispielsweise ein Präsenzsensor (beispielsweise Infrarotsensor), eine Kamera, ein Funkmodul, etc. Die elektrischen Funktionselemente sind üblicherweise an dem Montagekörper fixiert.

In typischen Anwendungsfällen werden gattungsgemäße Systeme so verwendet, dass mehrere Leuchtenbauteile, von denen jedes eine wie erläutert ausgebildete Tragschiene, einen wie erläutert ausgebildeten Montagekörper und eine wie erläutert ausgebildete Stromleitschiene umfasst, in Längsrichtung hintereinander angeordnet werden, wobei die Tragschienen der jeweiligen Leuchtenbauteile miteinander mechanisch mittels der mechanischen Kupplung gekoppelt sind und die Stromleitschienen der Leuchtenbauteile miteinander elektrisch leitend verbunden sind. Hierdurch können großflächig langgestreckte Leuchten geschaffen werden, wie dies in einer Vielzahl an Anwendungsfällen erforderlich ist. Die mechanische Kupplung kann beispielsweise als U-Profil ausgebildet sein, das in zwei nebeneinander angeordnete Tragschienen eingesetzt und daran befestigt wird, beispielsweise verklemmt oder verschraubt. Anstelle eines U-Profils können auch andere Profile, beispielsweise Verbindungsplatten, verwendet werden. Dabei umfasst somit eine Leuchte des jeweiligen Systems eine Vielzahl an Tragschienen, Montagekörpern und Stromleitschienen, die jeweils wie erläutert miteinander verbunden sind. Solche Leuchten sind per se mit externen Stromquellen und insbesondere Steuergeräten zu verbinden, sodass stets durch entsprechende elektrische Anschlüsse eine elektrische Verbindung der zumindest einen Stromleitschiene der Leuchte mit externen elektrischen Geräten vorhanden ist.

Als problematisch hat sich bei gattungsgemäßen Systemen die Verbindung zwischen den beiden Tragschienen mittels der mechanischen Kupplung herausgestellt. So kann in den meisten Fällen nicht gewährleistet werden, dass eine positionsfeste Fixierung der Tragschienen zueinander und jeweils an dem Baukörper auf einfache Weise und dauerhaft ermöglicht ist. Beispielsweise werden gattungsgemäße Leuchten üblicherweise mittels Seilen oder Ketten an dem Baukörper befestigt, wobei sich die Seile oder Ketten zwischen dem Baukörper und der Tragschiene entlang einer Vertikalrichtung erstrecken, sodass die Leuchte relativ zum Baukörper hängend befestigt ist. Dadurch ist eine schwingende Bewegung der Leuchte relativ zu dem Baukörper und der Tragschienen relativ zueinander senkrecht zur Vertikalrichtung zugelassen. Infolge der Bewegung der Tragschienen zueinander kann die Kupplung entlang der Längsrichtung aus zumindest einer der Tragschienen herausgleiten. Eine Befestigung der Tragschienen zueinander mittels der mechanischen Kupplung kann somit nur unzureichend gewährleistet werden. Im Stand der Technik existieren Ausführungsformen, in denen diesem Problem dergestalt begegnet wird, dass die mechanische Kupplung an beiden Tragschienen, die mittels der mechanischen Kupplung verbunden sind, mit zusätzlichen Befestigungsmitteln, beispielsweise mittels Schrauben an dem Tragschienenboden der jeweiligen Tragschiene befestigt ist. Eine Bewegung der mechanischen Kupplung relativ zu der jeweiligen Tragschiene, an der die mechanische Kupplung mittels der Befestigungsmittel befestigt ist, ist somit entlang der Längsrichtung verhindert. Dies ist jedoch aufgrund der damit einhergehenden aufwendigen Montage von mechanischer Kupplung und den Tragschienen relativ zueinander als nachteilig anzusehen. Darüber hinaus sind allgemein große Aussparungen in der mechanischen Kupplung zu vermeiden, da in einer Position, in der die mechanische Kupplung mit beiden Tragschienen verbunden ist, insbesondere in einer Betriebsposition, zwischen den Tragschienen über die mechanische Kupplung erhebliche Biegemomente übertragen werden, die zu einer erheblichen Beanspruchung der mechanischen Kupplung führen. Weiterhin ist der Bauraum in dem Innenraum der Tragschiene, bzw. der Tragschienen sowie die Zugänglichkeit zu dem Innenraum ausgehend von einer von dem Innenraum abgewandten Seite der Tragschiene begrenzt, da in dem Innenraum der Tragschiene verschiedene Komponenten der Leuchte angeordnet sind, wie beispielsweise die Stromleitschienen, Funktionselemente sowie Abschnitte des Montagekörpers. So können zur Festlegung von der mechanischen Kupplung und den Tragschienen in Längsrichtung nur Verbindungsmittel zum Einsatz kommen, die eine besonders geringe Erstreckung senkrecht zur Längsrichtung aufweisen, bzw. einen geringen Bauraum senkrecht zu Längsrichtung erfordern.

Der vorliegenden Erfindung liegt der Aufgabe zu Grunde, ein System, eine mechanische Kupplung für das System, ein Set, eine Leuchte und ein Verfahren zur Herstellung der Leuchte bereitzustellen, wodurch zumindest eines der Probleme gattungsgemäßer Systeme, Sets, mechanischer Kupplungen, Leuchten und Verfahren zumindest teilweise behoben werden kann.

Als eine Lösung der vorgenannt beschriebenen, der Erfindung zugrundeliegenden Aufgabe schlägt die Erfindung ein System mit den Merkmalen von Anspruch 1 vor. Das System ist geeignet zur Realisierung einer in einer Längsrichtung langgestreckten Leuchte. Das System umfasst eine erste und eine zweite Tragschiene, die sich mit ihrer Längserstreckung jeweils in der Längsrichtung zwischen ihren jeweiligen Längsenden erstrecken. Die erste der Tragschienen weist einen Tragschienenboden und eine sich von dem Tragschienenboden vertikal weg erstreckende erste Tragschienenseitenwand und eine sich von den Tragschienenboden vertikal weg erstreckende zweite Tragschienenseitenwand auf. Die zweite Tragschiene weist ebenfalls einen Tragschienenboden und eine sich von dem Tragschienenboden vertikal weg erstreckende erste Tragschienenseitenwand und eine sich von dem Tragschienenboden vertikal weg erstreckende zweite Tragschienenseitenwand auf. Die erste und die zweite Tragschiene sind jeweils zur Aufnahme einer in der Längsrichtung langgestreckten Stromleitschiene mit mehreren in Längsrichtung verlaufenden Leitungsdrähten ausgebildet. Bevorzugt umfasst das System die mehreren Leitungsdrähte. Insbesondere umfasst das System ferner die Stromleitschiene, insbesondere mehrere Stromleitschienen, insbesondere eine erste und eine zweite Stromleitschiene, die sich jeweils in Längsrichtung langgestreckt erstrecken. Insbesondere ist jeweils eine Gruppe an Leitungsdrähten jeweils genau einer der Stromleitschienen zugeordnet, wobei die Leitungsdrähte der Gruppe in dieser Stromleitschiene verlaufen, insbesondere sind sie von dieser Stromleitschiene integral umfasst. Insbesondere sind die Leitungsdrähte als elektrisch leitfähige Metalldrähte, insbesondere als Kabel, insbesondere als Flachbandkabel ausgebildet. Insbesondere umfasst die Stromleitschiene in Längsrichtung verlaufende Kanäle, in denen die ihr zugeordneten Leitungsdrähte in Längsrichtung verlaufend angeordnet sind. Insbesondere sind die Kanäle der Stromleitschiene entlang einer Transversalrichtung nebeneinander angeordnet ausgebildet. Insbesondere sind die Kanäle an einer entlang einer Vertikalrichtung ausgebildeten Zugangsseite offen. Das System umfasst ferner eine mechanische Kupplung, die in der Betriebsposition an einem Längsende der ersten Tragschiene und an einem Längsende der zweiten Tragschiene fixiert ist. Hierdurch, insbesondere ausschließlich hierdurch sind diese Längsenden der beiden Tragschienen, also der ersten Tragschiene und der zweiten Tragschiene, relativ zueinander fixiert. Insbesondere ist dadurch die relative Position der beiden Tragschienen zueinander eindeutig festgelegt. Insbesondere erstrecken sich die Tragschienenseitenwände jeweils von einem absoluten Transversalende des jeweiligen Tragschienenbodens entlang der Vertikalrichtung von dem jeweiligen Tragschienenboden weg. Insbesondere ist in der Betriebsposition durch beide der Tragschienen ein Innenraum gebildet, der insbesondere zumindest abschnittsweise von sämtlichen der Tragschienenseitenwände der ersten und der zweiten Tragschiene und von dem Tragschienenboden der ersten Tragschiene sowie von dem Tragschienenboden der zweiten Tragschiene umschlossen ist. Die mechanische Kupplung weist ferner eine erste Kupplungsseitenwand auf, die in der Betriebsposition an der ersten Tragschienenseitenwand der ersten Tragschiene und der ersten Tragschienenseitenwand der zweiten Tragschiene positionsfest fixiert ist. Insbesondere sind in der Betriebsposition die erste Tragschienenseitenwand der ersten Tragschiene und die der zweiten Tragschiene transversal auf einer gleichen Seite, bevorzugt zueinander fluchtend angeordnet. Bevorzugt ist die mechanische Kupplung mit der ersten Tragschiene und der zweiten Tragschiene lösbar verbunden. Die mechanische Kupplung weist ferner eine zweite Kupplungsseitenwand auf, die in der Betriebsposition an der zweiten Tragschienenseitenwand der zweiten Tragschiene und an der zweiten Tragschienenseitenwand der ersten Tragschiene positionsfest fixiert ist. Insbesondere sind die zweiten Tragschienenseitenwände der ersten und der zweiten Tragschiene transversal auf einer gleichen Seite, bevorzugt zueinander fluchtend angeordnet. Insbesondere erstrecken sich die erste Kupplungsseitenwand und die zweite Kupplungsseitenwand der mechanischen Kupplung flächig, bevorzugt jeweils mit einer Fläche von über 50 cm², insbesondere über 100 cm², entlang der Längsrichtung und entlang der Vertikalrichtung. Insbesondere ist die mechanische Kupplung mittels einer Fügebewegung an den Tragschienen fixierbar zur Herstellung einer Betriebsposition, wobei die mechanische Kupplung insbesondere mittels einer Lösebewegung aus der positionsfesten Fixierung lösbar ist. Die erste und die zweite Kupplungsseitenwand weisen jeweils eine Kupplungsinnenseite auf, wobei die Kupplungsinnenseiten in der Betriebsposition zueinander, das heißt jeweils in Richtung der jeweils anderen der Kupplungsseitenwände, weisen. Die mechanische Kupplung umfasst zumindest eine, insbesondere mehrere, aus einer Ruhelage federelastisch auslenkbare Kratzfedern. Mit der Ruhelage der Kratzfeder ist eine Lage gemeint, in der auf die von der Kupplung umfasste Kratzfeder keine äußeren Kräfte wirken. Die Kratzfeder ist an zumindest einer der Kupplungsseitenwände, also zumindest der ersten Kupplungsseitenwand oder der zweiten Kupplungsseitenwand, insbesondere unmittelbar anliegend, angeordnet. Bevorzugt ist an jeder der Kupplungsseitenwände jeweils zumindest eine Kratzfeder angeordnet. In der Betriebsposition ist die Kratzfeder, insbesondere gegenüber der Ruhelage, ausgelenkt und liegt an zumindest einer der Tragschienenseitenwände an. Insbesondere ist die Kratzfeder durch die Tragschienenseitenwand, an der die Kratzfeder anliegt, gegenüber der Ruhelage ausgelenkt unter Ausbildung einer inhärenten Federkraft, die die Kratzfeder an die Tragschiene presst. Insbesondere ist die Kratzfeder in der Betriebsposition in einer Richtung, die von der Tragschienenseitenwand, an der die Kratzfeder anliegt, weg weist, insbesondere senkrecht zur Längsrichtung, insbesondere entlang der Transversalrichtung ausgelenkt. Besonders bevorzugt umfasst die Kupplung eine erste Kratzfeder, die in der Betriebsposition an den beiden ersten Tragschienenseitenwänden der beiden Tragschienen anliegt und insbesondere eine zweite Kratzfeder, die in der Betriebsposition an den zweiten Tragschienenseitenwänden der beiden Tragschienen positionsfest anliegt. Hierdurch kann die relative Position der beiden Tragschienen zueinander aufgrund des Anliegens der Kratzfeder an den Tragschienenseitenwänden beider Tragschienen besonders begünstigt sein. Insbesondere sind die erste Kupplungsseitenwand und die zweite Kupplungsseitenwand voneinander entlang der Transversalrichtung beabstandet. Insbesondere ist an jeder der Kupplungsseitenwände ein der mechanischen Kupplung zugeordneter Halteabschnitt angeordnet, insbesondere integral mit der jeweiligen Kupplungsseitenwand ausgebildet. Der Halteabschnitt erstreckt sich bevorzugt geradlinig entlang der Vertikalrichtung und liegt an seinem vertikalen oberen Ende und an seinem vertikal unteren Ende jeweils an der ersten und an der zweiten Tragschiene mit einer vertikalen Presskraft an. Durch die geradlinige Erstreckung des Halteabschnitts und das Anliegen mit einer vertikalen Presskraft an seinen vertikalen Enden ermöglicht der Halteabschnitt eine besonders zuverlässige Fixierung der Kupplung an den Tragschienen und somit eine besonders zuverlässige Fixierung der Tragschiene zueinander. Besonders bevorzugt weist die Kupplung eine Kupplungsbrücke auf, die in Transversalrichtung verläuft und die beiden Kupplungsseitenwände miteinander verbindet, wobei sich der Halteabschnitt vertikal über die Kupplungsbrücke hinaus erstreckt.

Das erfindungsgemäße System bringt wesentliche Vorteile mit sich. Durch die Kratzfeder ist eine besonders zuverlässige Fixierung der Kupplung an den Tragschienen gewährleistet. Insbesondere gewährleistet die Kratzfeder eine zuverlässige Relativfixierung der Tragschienen zueinander entlang der Längsrichtung, indem die Kratzfeder sich in zumindest eine, insbesondere in beide Tragschienen verkrallt. Darüber hinaus kann durch die Kratzfeder ein zuverlässiger elektrischer Kontakt zwischen den beiden Tragschienen erzeugt werden, sodass bei Verbindung von nur einer Tragschiene mit einem PE-Leiter über die Kupplung auch die andere der Tragschienen mit dem PE-Leiter verbunden ist. Aufgrund der Anordnung der Kratzfeder an der Kupplungsseitenwand kann darüber hinaus die Kratzfeder besonders platzsparend vorgesehen sein. Besonders bevorzugt ist die Kratzfeder ausschließlich in einem Längsbereich der Kupplung angeordnet, der ausgehend von den zueinander weisenden Längsenden der beiden Tragschienen sich in Längsrichtung um weniger als 10 cm, insbesondere weniger als 8 cm, insbesondere weniger als 5 cm, insbesondere weniger als 3 cm, in beide Tragschienen hinein erstreckt. Indem die Kratzfeder somit nahe der zueinander weisenden Längsenden der Tragschiene vorgesehen ist, ist das Zusammenfügen der Tragschienen besonders vereinfacht, da die durch die Kratzfeder an der Tragschienenseitenwand erzeugte Kraft nur über einen kurzen Fügeweg hinweg überwunden werden muss.

In einer bevorzugten Ausführungsform weist die mechanische Kupplung zumindest eine Kupplungsbrücke auf. Insbesondere steht die Kupplungsbrücke gegenüber den Kupplungsseitenwänden vertikal vor. Die erste Kupplungsseitenwand und die zweite Kupplungsseitenwand sind durch die zumindest eine Kupplungsbrücke verbunden. Die Kupplungsbrücke verläuft dabei in Transversalrichtung und verbindet die Kupplungsseitenwände miteinander. Dabei erstreckt sich die Kupplungsbrücke über einen bestimmten Längsabschnitt der Kupplungsseitenwände. Die Kupplungsbrücke ist dazu ausgebildet, die beiden Kupplungsseitenwände zumindest innerhalb des Längsabschnitts, über den sich die Kupplungsbrücke hinweg erstreckt, starr miteinander zu verbinden, um eine Relativbewegung, insbesondere ein Aufeinanderzubewegen, der beiden Kupplungsseitenwände in Transversalrichtung zueinander zu vermeiden. Somit ist die Kupplungsbrücke dazu ausgebildet, einen Abstand in Transversalrichtung zwischen den Kupplungsseitenwänden zumindest über ihre Längserstreckungslänge hinweg festzulegen. Dies bringt den besonderen Vorteil mit sich, dass die beiden Tragschienen in der Betriebsposition mit einer hohen Steifigkeit miteinander verbunden werden können. Bevorzugt ist die Kupplungsbrücke dazu ausgebildet, bei Einwirkung einer transversalen Kraft auf beide Kupplungsseitenwände von außen zur transversalen Mitte der Kupplung hin auf sämtliche der an den Kupplungsseitenwänden vorgesehenen Kratzfedern den transversalen Abstand zwischen den Kupplungsseitenwänden unverändert starr festzulegen, wenn der Betrag einer jeden Kraft, die transversal von außen an jeder der Kupplungsseitenwände jeweils auf sämtliche der an der jeweiligen Kupplungsseitenwand angeordneten Kratzfedern wirkt, 10 % des Betrags der durch sämtliche an der jeweiligen Kupplungsseitenwand vorgesehenen Kratzfedern gemeinsam ausgebildeten Federkraft überschreitet, sodass durch diese jeweilige Kraft die Kratzfeder ausgehend von der Ruhelage in Transversalrichtung maximal zur transversalen Mitte der Kupplung hin ausgelenkt werden kann. Dies bringt den besonderen Vorteil mit sich, dass durch die Kupplungsbrücke eine besonders vorteilhafte Gegenkraft aufgenommen wird, wenn die Kratzfeder bei dem Einfügen der Kupplung in die Tragschienen zur Realisierung der Betriebsposition transversal ausgelenkt wird. Bevorzugt ist die Kupplungsbrücke in einem Bereich um die Mitte bezogen auf die Längsrichtung der Kupplung angeordnet. Insbesondere weist die Kupplungsbrücke zu beiden Längsenden der mechanischen Kupplung einen gleichen Abstand auf, wobei sich der Abstand zu den Längsenden um weniger als 20 %, insbesondere weniger als 10 % unterscheidet. Insbesondere umfasst die Kupplungsbrücke mehrere, insbesondere zwei Kupplungsbrückenabschnitte, die entlang der Längsrichtung voneinander, insbesondere durch einen in Längsrichtung zwischen ihnen vorgesehenen Freiraum, der sich bevorzugt ausgehend von einer ersten der Kupplungsseitenwänden ununterbrochen bis zu der ihr transversal gegenüberliegenden Kupplungsseitenwand erstreckt, beabstandet sind, wobei sie ferner insbesondere von der Mitte der Kupplung beabstandet sind. Insbesondere erstrecken sich die Kupplungsbrückenabschnitte, insbesondere sämtliche der Kupplungsbrückenabschnitte, bezogen auf die Längsrichtung außerhalb, bevorzugt vollständig außerhalb, der Erstreckung der zumindest einen Kratzfeder.

In einer bevorzugten Ausführungsform weist die Kratzfeder zumindest eine Kratznase auf, die in der Betriebsposition unmittelbar gegen eine der Tragschienenseitenwände presst. Insbesondere weist die Kratzfeder mehrere Kratznasen auf, die insbesondere entlang der Längsrichtung und insbesondere entlang der Transversalrichtung voneinander beabstandet sind, wobei besonders bevorzugt in der Betriebsposition sämtliche der Kratznasen unmittelbar gegen jeweils eine der Tragschienenseitenwände pressen. Insbesondere weist die Kratzfeder einen Federabschnitt, insbesondere mehrere Federabschnitte, auf. Der Federabschnitt, insbesondere die Federabschnitte, erstrecken sich von zumindest einer, insbesondere sämtlichen der Kratznasen, insbesondere in Längsrichtung und bevorzugt in einer Richtung senkrecht zur Längsrichtung von der Kratznase weg. Insbesondere grenzt der Federabschnitt unmittelbar an die Kratznase an. Bevorzugt bildet der Federabschnitt einen ersten und die Kratznase einen zweiten Abschnitt der Kratzfeder, wobei die beiden Abschnitte durch eine Abwinklung ineinander übergehen, insbesondere mit einem Winkel von mindestens 30 °, wobei der erste Abschnitt einen um mindestens 30 ° größeren Winkel zur Transversalrichtung bildet als der zweite Abschnitt. In der Betriebsposition ist der Federabschnitt, insbesondere jeder der Federabschnitte entlang einer Auslenkungsrichtung, die senkrecht zur Längsrichtung, insbesondere entlang der Transversalrichtung, insbesondere in einer zu der anderen Kupplungsseitenwand weisenden Richtung verläuft, gegenüber der Ruhelage federelastisch ausgelenkt. Insbesondere ist die Kratznase in einem sich entlang der Auslenkungsrichtung von dem Federabschnitt weg erstreckenden Abschnitt starr. Bevorzugt ist in der Betriebsposition zumindest 90 % der Auslenkung der Kratzfeder ausgehend von der Ruhelage durch Auslenkung des Federabschnitts und somit nicht von der Kratznase realisiert. Insbesondere ist eine die Erstreckung des Federabschnitts abbildende und senkrecht zur Auslenkungsrichtung verlaufende Projektionsfläche größer, insbesondere 20 % größer, insbesondere 60 % größer, insbesondere 80 % größer, insbesondere mehr als 100 % größer als eine die Erstreckung der Kratznase abbildende und senkrecht zur Auslenkungsrichtung verlaufende Projektionsfläche. Insbesondere weist die Kratznase ein axiales Flächenträgheitsmoment auf, dass zumindest doppelt so hoch ist wie das axiale Flächenträgheitsmoment des Federabschnitts bezogen auf eine Verformung durch die Auslenkung in Auslenkungsrichtung.

In einer bevorzugten Ausführungsform ist die Kratzfeder separat von der ersten und von der zweiten Kupplungsseitenwand sowie insbesondere von der Kupplungsbrücke ausgebildet, wobei insbesondere die mechanische Kupplung mehrere Kratzfedern umfasst, insbesondere zumindest eine erste Kratzfeder und eine zweite Kratzfeder, die separat voneinander und separat von der ersten und von der zweiten Kupplungsseitenwand, und insbesondere von der Kupplungsbrücke, ausgebildet sind. Insbesondere ist die erste Kratzfeder an der ersten Kupplungsseitenwand angeordnet und die zweite Kratzfeder an der zweiten Kupplungsseitenwand angeordnet. Insbesondere sind die Kratznasen jeweils an einer der Kupplungsseitenwände befestigt, insbesondere mittelbar über den Federabschnitt der jeweiligen Kratzfeder. Bevorzugt ist der Federabschnitt an einer Kupplungsinnenseite einer der Kupplungsseitenwände angeordnet, wobei die Kratznasen von dem Federabschnitt weg durch in der Kupplungsseitenwand vorgesehene Durchgangsöffnungen transversal nach außen hindurchragen. Allgemein bevorzugt ist an zumindest einer, insbesondere jeder, der Kupplungsseitenwände zumindest eine der Kratzfedern angeordnet, die mehrere Kratznasen aufweist, wobei in der Betriebsposition an jeder der Tragschienenseitenwände, an der die jeweilige Kupplungsseitenwand fixiert ist, zumindest eine der Kratznasen, insbesondere mehrere der Kratznasen, der Kratzfeder, beim Vorsehen mehrerer Kratzfedern an der Kupplungsseitenwand bevorzugt von jeder der Kratzfedern jeweils zumindest eine ihrer Kratznasen, anliegt unter Ausbildung einer die Tragschienen in der Betriebsposition zueinander fixierenden reibschlüssigen Verbindung zwischen den Tragschienenseitenwänden mittels der mechanischen Kupplung, insbesondere mittels der Kratzfeder, so dass direkt über die Kratzfeder die reibschlüssige Verbindung, mit der eine erste Kratznase der Kratzfeder an einer ersten der Tragschienenseitenwände anliegt, mit der reibschlüssigen Verbindung, mit der eine zweite Kratznase der Kratzfeder an einer zweiten der Tragschienenseitenwände anliegt, verbunden ist und hierdurch über diese reibschlüssigen Verbindungen und die Kratzfeder, in der die Kratznasen integriert sind, eine Verbindung zwischen den Tragschienenseitenwänden hergestellt ist, so dass die Kratzfeder selbst im Kraftfluss liegt, wenn eine Relativkraft in Längsrichtung zwischen den beiden Tragschienen, die durch die Kupplung miteinander verbunden sind, aufgebracht wird. Allgemein bevorzugt liegt somit die Kratzfeder mit zumindest einer ihrer Kratznasen an einer Tragschienenseitenwand einer ersten Tragschiene und mit zumindest einer anderen ihrer Kratznasen an einer Tragschienenseitenwand einer zweiten Tragschiene jeweils mit einer reibschlüssigen Verbindung an, so dass die Kratzfeder selbst die Tragschienen zueinander fixiert, indem sie die beiden Kratznasen integral aufweist.

In einer bevorzugten Ausführungsform ist die Kratzfeder an der Kupplungsinnenseite der jeweiligen Kupplungsseitenwand angeordnet. Insbesondere sind zumindest einige der Kratzfedern jeweils unmittelbar an der Kupplungsinnenseite der ersten Kupplungsseitenwand und/oder einige der Kratzfedern entsprechend an der Kupplungsinnenseite der zweiten Kupplungsseitenwand angeordnet. Die Kratzfeder, insbesondere die Kratznase der Kratzfeder, ragt durch eine in der Kupplungsseitenwand, an der die Kratzfeder angeordnet ist, ausgebildete Durchgangsöffnung hindurch. Die Kratzfeder ist somit nur mit einem Abschnitt an der Kupplungsinnenseite der jeweiligen Kupplungsseitenwand angeordnet. Die Kupplungsinnenseite ist dabei die Seite, die transversal zur gegenüberliegenden Kupplungsseitenwand weist. Durch diese vorteilhafte Ausgestaltung kann die Kratzfeder in der Kupplung besonders platzsparend und zugleich funktional zuverlässig vorgesehen sein. Insbesondere ist in jeder Lage, in der die Kratzfeder durch die Durchgangsöffnung der Kupplungsseitenwand hindurchragt, ein Abschnitt der Kratzfeder, insbesondere zumindest der Federabschnitt der Kratzfeder, an der Kupplungsinnenseite der Kupplungsseitenwand angeordnet. Insbesondere ist die Kratzfeder an der Kupplungsinnenseite der Kupplungsseitenwand befestigt. Insbesondere liegt die Kratzfeder mit dem Abschnitt, insbesondere mit ihren Kratznasen, mit dem bzw. mit denen sie durch die Durchgangsöffnung der Kupplungsseitenwand hindurchragt, ausschließlich an der Tragschienenseitenwand und somit nicht an der Kupplungsseitenwand an. Insbesondere ist die Kratzfeder gegenüber der Ruhelage in der Betriebsposition in einer von der Kupplungsseitenwand, an der die Kratzfeder befestigt ist, weg weisenden Richtung ausgelenkt. Insbesondere ragt die Kratzfeder nur mit ihrer Kratznase durch die Durchgangsöffnung der Kupplungsseitenwand hindurch. Insbesondere sind sämtliche Abschnitte der Kratzfeder, die nicht der Kratznase zugeordnet sind, an der Kupplungsinnenseite der Kupplungsseitenwand angeordnet. Insbesondere weist die Kupplungsseitenwand mehrere der Durchgangsöffnungen auf, wobei durch jede der Durchgangsöffnungen zumindest ein Abschnitt, insbesondere zumindest eine Kratznase der Kratzfeder, insbesondere transversal hindurchragt. Insbesondere ist die Kratzfeder mit zumindest 50 %, insbesondere 70 %, insbesondere 85 % ihrer Erstreckung an der Kupplungsseite der Kupplungsseitenwand, an der die Kratzfeder angeordnet ist, angeordnet. Bevorzugt erstreckt sich die Kratzfeder mit weniger als 30 % ihrer Gesamterstreckung, insbesondere weniger als 10 % ihrer gesamten Erstreckung durch die Durchgangsöffnung hindurch.

Bevorzugt umfasst zumindest eine der Kupplungsseitenwände eine Fixiereinrichtung und die Kratzfeder eine zu dieser Fixiereinrichtung korrespondierend ausgebildete Halteeinrichtung. Insbesondere ist dabei die Fixiereinrichtung durch die Kupplungsseitenwand und/oder die Halteeinrichtung durch die Kratzfeder integral ausgebildet. Insbesondere weist die erste Kupplungsseitenwand und die zweite Kupplungsseitenwand jeweils eine Fixiereinrichtung auf, wobei mehrere der Kratzfedern vorgesehen sind, die jeweils eine zu einer der Fixiereinrichtungen korrespondierend ausgebildete Halteeinrichtung aufweisen. In der Betriebsposition ist die Fixiereinrichtung mit der Halteeinrichtung insbesondere starr, insbesondere formschlüssig und/oder kraftschlüssig verbunden unter positionsfester Fixierung der Kratzfeder an der Kupplungsseitenwand. Insbesondere ist die Fixiereinrichtung mit der Halteeinrichtung entlang der Längsrichtung formschlüssig verbunden. Insbesondere ist in der Betriebsposition die Fixiereinrichtung mit der Halteeinrichtung bezogen auf eine Richtung senkrecht zur Längsrichtung ausschließlich kraftschlüssig verbunden. Insbesondere sind die Fixiereinrichtung und die Halteeinrichtung aneinander unter positionsfester Fixierung der Kratzfeder an der Kupplungsseitenwand geklemmt. Insbesondere sind die Fixiereinrichtung und die Halteeinrichtung durch das Aufbringen einer senkrecht zur Längsrichtung gerichteten Fixierkraft miteinander verbindbar, wobei die Fixiereinrichtung von der Halteeinrichtung mittels einer der Fixierkraft entgegengerichteten Lösekraft, die insbesondere zumindest das 1,5-fache, insbesondere das Doppelte, insbesondere zumindest das Fünffache, insbesondere zumindest das Zehnfache der Fixierkraft beträgt, lösbar ist. Bevorzugt ist die Kratzfeder ausgehend von der Ruhelage gegen eine von ihr bereitgestellte Federkraft in Transversalrichtung auslenkbar zum Erreichen der Betriebsposition, wobei die Lösekraft mindestens das Dreifache, insbesondere mindestens das Zehnfache der in der Betriebsposition wirksamen Federkraft beträgt. Insbesondere sind die Fixiereinrichtung und die Halteeinrichtung in der Betriebsposition aneinander mittels einer entlang einer Richtung selbstverstärkenden Klemmverbindung geklemmt.

In einer bevorzugten Ausführungsform ist die Fixiereinrichtung durch einen Fixierabschnitt der Kupplungsseitenwand gebildet, wobei sich der Fixierabschnitt senkrecht zur Längsrichtung von einem Führungsabschnitt der Kupplungsseitenwand, der sich in Längsrichtung langgestreckt erstreckt und in der Betriebsposition mit seinen beiden vertikalen Enden an beiden Tragschienen anliegt, wegerstreckt. Insbesondere umfasst der Führungsabschnitt der Kupplungsseitenwand den der mechanischen Kupplung zugeordneten Halteabschnitt. Die Halteeinrichtung weist zumindest zwei in der Betriebsposition auf einander, insbesondere in Längsrichtung und/oder in Transversalrichtung gegenüberliegenden Seiten des Fixierabschnitts angeordnete und insbesondere mit ihren transversalen Enden von der Kupplungsseitenwand weg weisende Klemmabschnitte auf, die in der Betriebsposition mit dem Fixierabschnitt, insbesondere unter Ausbildung einer sich entlang einer Richtung selbstverstärkenden Klemmung, unmittelbar verbunden sind zum Halten der Kratzfeder an der Kupplungsseitenwand. Bevorzugt sind die Kupplungsseitenwand einschließlich des Fixierabschnitts und die Kratzfeder einschließlich der Klemmabschnitte aus einem Blech gefertigt. Insbesondere weisen das Blech, aus dem der Fixierabschnitt, insbesondere die gesamte Kupplungsseitenwand, insbesondere beide Kupplungsseitenwände und die Kupplungsbrücke gemeinsam, gefertigt ist, und das Blech, aus dem die Klemmabschnitte, insbesondere die gesamte Halteeinrichtung, insbesondere die gesamte Kratzfeder, gefertigt sind, eine unterschiedliche Blechdicke auf. Insbesondere weist das Blech des Fixierabschnitts eine größere, insbesondere eine 1,5-mal so große, insbesondere eine doppelt so große, insbesondere eine 3-mal so große Blechdicke auf, wie das Blech der Klemmabschnitte. Insbesondere erstreckt sich der Fixierabschnitt entlang der Transversalrichtung durch eine Öffnung, die durch die Klemmabschnitte gebildet ist. Insbesondere verlaufen der Führungsabschnitt der Kupplungsseitenwand und der Fixierabschnitt der Kupplungsseitenwand im Wesentlichen senkrecht zueinander. Insbesondere und allgemein vorteilhaft verlaufen die Wirkrichtungen der Federkraft und der Presskraft senkrecht zueinander, wobei die Federkraft vorzugsweise entlang einer Richtung in Transversalrichtung wirkt, wobei insbesondere die Presskraft entlang einer Richtung in Vertikalrichtung wirkt. Besonders bevorzugt ist die Halteinrichtung innerhalb des Federabschnitts der Kratzfeder ausgebildet, wobei sich der Federabschnitt ausgehend von der Halteeinrichtung in beide Richtungen, bevorzugt jeweils über mindestens 1 cm, insbesondere mindestens 2 cm, entlang der Längsrichtung weg erstreckt. Bevorzugt sind an dem Federabschnitt die Kratznasen der Kratzfeder vorgesehen und von der Halteeinrichtung jeweils um mindestens 1 cm in Längsrichtung beabstandet. Bevorzugt sind, bezogen auf die Längsrichtung, auf beiden Seiten der Halteeinrichtung jeweils mindestens eine, bevorzugt mindestens zwei Kratznasen an dem Federabschnitt vorgesehen. Durch das Vorsehen einer Halteeinrichtung an der Kratzfeder und einer Fixiereinrichtung an der Kupplungsseitenwand kann die Kratzfeder auf besonders einfache und funktionale Weise an der Kupplungsseitenwand befestigt sein. Durch die Ausbildung der Halteeinrichtung durch den Federabschnitt können die Kratznasen in besonders einfacher Weise federelastisch mit der Kupplungsseitenwand verbunden sein. An dieser Stelle sei ganz allgemein darauf hingewiesen, dass bevorzugt die gesamte Kratzfeder einstückig aus einem Blech hergestellt ist. Im Übrigen sei an dieser Stelle ganz allgemein darauf hingewiesen, dass selbstverständlich die Ausführungen zu einer konkreten Kratzfeder anwendbar sind auf Ausführungsformen, in denen die Kupplung mehrere Kratzfedern aufweist, wobei dann jede der Kratzfedern jeweils Merkmale aufweisen kann, die vorliegend in verschiedenen Ausführungsformen zu einer Kratzfeder beschrieben sind.

In einer Ausführungsform weist die Kupplungsseitenwand, an der die Kratzfeder angeordnet ist und die die erläuterte Fixiereinrichtung aufweist, ferner eine Anschlagseinrichtung auf, die die Kratzfeder hintergreift unter Beschränkung einer Bewegung der Kratzfeder relativ zur Kupplungsseitenwand. Selbstverständlich ist dies sowie die nachfolgenden Ausführungen auf Ausführungsbeispiele anwendbar, in denen jede der Kupplungsseitenwände jeweils eine Fixiereinrichtung aufweist und an jeder der Kupplungsseitenwand, wie oben erläutert, mittels der Fixiereinrichtung jeweils über ihre Halteeinrichtung jeweils eine Kratzfeder gehalten ist. Durch das Hintergreifen der Kratzfeder ist die Kupplungsseitenwand somit an zwei in einer bestimmten Richtung voneinander weg weisenden Seiten der Kratzfeder angeordnet, so dass die Kupplungsseitenwand einen Zwischenraum definiert, in dem die Kratzfeder in der Betriebsposition angeordnet ist, wobei der Zwischenraum in der bestimmten Richtung an seinen beiden Enden durch die Kupplungsseitenwand begrenzt ist und dadurch die Bewegung der Kratzfeder in dieser bestimmten Richtung auf den Bereich zwischen den von der Kupplungsseitenwand vorgegebenen Enden begrenzt ist. Bevorzugt verläuft die Fixiereinrichtung bezogen auf die genannte bestimmte Richtung innerhalb der Erstreckung des Zwischenraums. Besonders bevorzugt verläuft die bestimmte Richtung entlang, insbesondere in Transversalrichtung. Besonders bevorzugt ist der Zwischenraum durch einen Abschnitt der Kupplungsseitenwand in der bestimmten Richtung begrenzt, von dem aus sich die Fixiereinrichtung zur in Transversalrichtung gegenüberliegenden Kupplungsseitenwand erstreckt.

In einer Ausführungsform ist die Kupplungsseitenwand mit einem ersten Abschnitt an einer ersten transversalen Seite der Kratzfeder und mit einem zweiten Abschnitt an einer zweiten transversalen Seite der Kratzfeder angeordnet. Die Kupplungsseitenwand bildet somit diese beiden von ihr umfassten Abschnitte aus. Die Anschlagseinrichtung bildet den ersten Abschnitt aus. Entsprechend ist durch die beiden Abschnitte der Kupplungsseitenwand die Bewegung der Kratzfeder ausgehend von der Betriebsposition in Transversalrichtung beschränkt. Besonders bevorzugt weist die Kratzfeder einen Anschlagsabschnitt auf, der senkrecht zur Transversalrichtung mit der Anschlagseinrichtung überlappt. Entsprechend kommt der Anschlagsabschnitt der Kratzfeder bei einer hinreichenden transversalen Auslenkung der Kratzfeder ausgehend von der Betriebsposition zur Anschlagseinrichtung hin an der Anschlagseinrichtung zur Anlage, so dass das Zusammenwirken von Anschlagsabschnitt und Anschlagseinrichtung die Bewegung der Kratzfeder in Transversalrichtung ausgehend von der Betriebsposition begrenzt. Bevorzugt ist die Kratzfeder mit ihren Kratznasen von der Tragschiene, an der sie mit ihren bzw. ihrer Katznasen bzw. Kratznase in der Betriebsposition anliegt, gelöst, wenn ihr Anschlagsabschnitt ausgehend von der Betriebsposition so weit ausgebildet ist, dass er an der Anschlagseinrichtung der Tragschiene anliegt. Bevorzugt ist an der der Anschlagseinrichtung gegenüberliegenden transversalen Seite des Anschlagsabschnitts in der Kupplungsseitenwand ein Freiraum vorgesehen, was die Herstellung der Anschlagseinrichtung besonders vereinfacht, da hierdurch die Anschlagseinrichtung durch einen Stanz- und Umformprozess ausgehend von einem Blech herstellbar ist, aus dem bevorzugt die mechanische Kupplung insgesamt hergestellt wird. Dabei bildet ein von der Anschlagseinrichtung senkrecht zur Transversalrichtung versetzter Abschnitt der Kupplungsseitenwand den genannten zweiten Abschnitt der Kupplungsseitenwand. Bevorzugt ist in der Betriebsposition der Anschlagsabschnitt von der Anschlagseinrichtung beabstandet, insbesondere in Transversalrichtung beabstandet. Somit ist eine Beweglichkeit des Anschlagsabschnitts in Transversalrichtung relativ zur Anschlagseinrichtung ausgehend von der Betriebsposition gewährleistet, jedoch durch das Zusammenwirken von Anschlagseinrichtung und Anschlagsabschnitt beschränkt. Bevorzugt ist eine Beweglichkeit ausgehend von der Betriebsposition zwischen 0,5 mm und 5 mm, insbesondere zwischen 0,5 mm und 2 mm gewährleistet. Besonders bevorzugt ist der Anschlagsabschnitt in einer vorgegebenen, senkrecht zur Transversalrichtung verlaufenden Richtung von der Halteeinrichtung um mindestens 20 %, insbesondere mindestens 30 % der Erstreckungslänge der Kratzfeder in dieser vorgegebenen Richtung beabstandet. Besonders bevorzugt verläuft diese vorgegebene Richtung in Längsrichtung.

In einer Ausführungsform ist der Anschlagsabschnitt an einem ersten Längsende der Kratzfeder vorgesehen. Hierdurch kann eine einfache Montierbarkeit der Kratzfeder und eine definierte Vorgabe der Beweglichkeit der Kratzfeder senkrecht zur Transversalrichtung ermöglicht sein. Bevorzugt ist das dem ersten Längsende gegenüberliegende zweite Längsende der Kratzfeder an der ersten transversalen Seite der Kratzfeder, an der am ersten Längsende der Kratzfeder die Anschlagseinrichtung vorgesehen ist, mit der Kupplungsseitenwand überlappungsfrei, so dass die Kupplungsseitenwand somit am zweiten Längsende nicht an dieser Seite der Kratzfeder angeordnet ist. Somit ist die Kratzfeder in ihrer Auslenkung in Transversalrichtung nur an ihrem ersten Längsende beschränkt, während sie an ihrem zweiten Längsende grundsätzlich nicht beschränkt ist und somit von ihrem zweiten Längsende aus bevorzugt so weit relativ zur Kupplungsseitenwand bewegbar ist, dass die Halteeinrichtung von der Fixiereinrichtung lösbar ist. Dies ermöglicht eine einfache Montage der Kratzfeder an der Kupplungsseitenwand. Die Erfinder haben erkannt, dass das Vorsehen der Anschlagseinrichtung an nur dem ersten Längsende der Kratzfeder vorteilhaft und für den Zweck der Kratzfeder hinreichend ist, da üblicherweise die mechanische Kupplung mit einem Längsende in einer Tragschiene fixiert ausgeliefert wird und nur das gegenüberliegende Längsende der Kupplung am Montageort in eine weitere Tragschiene einzuführen ist, so dass an diesem Längsende der Kupplung, und bei entsprechender Ausbildung an nur dem ersten Längsende der Kratzfeder, eine Gefahr eines ungewollten Lösens der Halteeinrichtung von der Fixiereinrichtung besteht.

In einer Ausführungsform weist die Kratzfeder zu der Halteeinrichtung versetzt, insbesondere entlang einer Richtung senkrecht zur Transversalrichtung, insbesondere entlang der Längsrichtung, versetzt, zumindest einen Betätigungsabschnitt auf, der in der Betriebsposition von der Kupplungsseitenwand, an der die Kratzfeder angeordnet ist, um einen Abstand beabstandet ist. Bevorzugt ist der Betätigungsabschnitt von dem oben erläuterten zweiten Abschnitt der Kupplungsseitenwand beabstandet, so dass sich zwischen dem Betätigungsabschnitt und diesem zweiten Abschnitt der Kupplungsseitenwand ein Zwischenraum ergibt. Dieser Zwischenraum ist bevorzugt von einer senkrecht auf der Transversalrichtung stehenden Richtung aus zugänglich. Bevorzugt ist der Betätigungsabschnitt durch eine in der Betriebsposition schräg zur Kupplungsseitenwand, insbesondere schräg zum oben erläuterten Führungsabschnitt der Kupplungsseitenwand verlaufenden Abschnitt der Kratzfeder ausgebildet, bevorzugt verläuft der Abschnitt in einem Winkel um die Längsrichtung und/oder in einem Winkel um die Vertikalrichtung schräg zur Kupplungsseitenwand, insbesondere schräg zum Führungsabschnitt der Kupplungsseitenwand. Hierdurch ist der Betätigungsabschnitt besonders leicht zugänglich. Der Betätigungsabschnitt ist dazu ausgebildet, ein Eingreifen eines Werkzeugs zwischen Kupplungsseitenwand und Betätigungsabschnitt zu ermöglichen, um hierdurch die Kratzfeder in Transversalrichtung ausgehend von der Betriebsposition auszulenken, indem die Kratzfeder zumindest abschnittsweise, insbesondere mit zumindest einer ihrer Kratznasen, in Transversalrichtung zu der Kupplungsseitenwand hin ausgelenkt wird, die der Kupplungsseitenwand gegenüberliegt, an der die Kratzfeder angeordnet ist. Bevorzugt ist der Betätigungsabschnitt dazu ausgebildet, ein Einführen eines Schlitzschraubendrehers in den Abstand zum transversalen Auslenken der Kratzfeder ausgehend von der Betriebsposition zu ermöglichen. Bevorzugt ist der zumindest eine Betätigungsabschnitt in einer definierten Richtung, die senkrecht auf der Transversalrichtung steht, um mindestens 15 %, insbesondere um mindestens 20 %, insbesondere um mindestens 25 % der Erstreckungslänge der Kratzfeder in dieser vorgegebenen Richtung von der Halteeinrichtung beabstandet. Bevorzugt ist der zumindest eine Betätigungsabschnitt in einer solchen vorgegebenen Richtung zwischen dem Anschlagsabschnitt und der Halteeinrichtung angeordnet. Bevorzugt ist der Betätigungsabschnitt entlang einer linearen Richtung, die bevorzugt senkrecht zur Transversalrichtung verläuft, von der Halteeinrichtung zumindest so weit beabstandet wie von dem Anschlagsabschnitt. Die genannte vorgegebene Richtung und/oder die genannte lineare Richtung verlaufen insbesondere in Längsrichtung.

Besonders bevorzugt weist die Kratzfeder zumindest eine in einer senkrecht zur Transversalrichtung verlaufenden Richtung langgestreckt ausgebildete Versteifungsumformung auf. Die Versteifungsumformung kann beispielsweise als Sicke ausgebildet sein. Durch die Versteifungsumformung kann die Kratzfeder eine höhere Federkraft ausbilden und somit gewährleisten, dass sie mit ihrer zumindest einen Kratznase in der Betriebsposition mit einer hohen Federkraft gegen die Tragschienenseitenwand presst. Bevorzugt verläuft die Versteifungsumformung in Längsrichtung langgestreckt. Bevorzugt verläuft die Versteifungsumformung in Längsrichtung zwischen dem Anschlagsabschnitt und der Halteeinrichtung. Bevorzugt ist die Versteifungsumformung von der Halteeinrichtung und von dem Anschlagsabschnitt beabstandet.

In einer bevorzugten Ausführungsform weist die Kratzfeder mehrere Kratznasen auf. Bevorzugt sind zumindest einige, insbesondere sämtliche der Kratznasen der Kratzfeder, insbesondere einer der Kratzfedern zumindest in der Betriebsposition gleichmäßig um die Fixiereinrichtung und/oder die Halteeinrichtung verteilt. Insbesondere erstreckt sich zwischen jeder der Kratznasen der Kratzfeder und der Halteeinrichtung der Kratzfeder der Federabschnitt der Kratzfeder. Bevorzugt weist die Kratzfeder eine erste Gruppe an Kratznasen auf, die eine oder mehrere Kratznasen umfasst, sowie eine zweite Gruppe an Kratznasen, die eine oder mehrere weitere, nicht der ersten Gruppe zugeordnete Kratznasen umfasst, wobei die erste Gruppe an Kratznasen in Längsrichtung um mindestens 2 cm von der zweiten Gruppe an Kratznasen und/oder um mindestens 50 % der Erstreckungslänge der Kratzfeder in Längsrichtung beabstandet ist. Bevorzugt ist die erste Gruppe an Kratznasen, bezogen auf die Längsrichtung, an einer ersten Seite der Fixiereinrichtung angeordnet, die zweite Gruppe an einer zweiten, von der ersten mit Bezug auf die Längsrichtung abgewandten Seite der Fixiereinrichtung. Bevorzugt liegt in der Betriebsposition die erste Gruppe an Kratznasen an der unteren Tragschiene an, die zweite Gruppe an Kratznasen an der zweiten Tragschiene. Bevorzugt ist eine der Gruppen der Kratznasen vollständig zwischen der Halteeinrichtung und dem Anschlagsabschnitt angeordnet, insbesondere mit Bezug auf die Längsrichtung, insbesondere ist diese Gruppe der Kratznasen von der Halteeinrichtung um mindestens 5 mm, insbesondere mindestens 10 mm beabstandet und/oder von dem Anschlagsabschnitt um mindestens 2 mm beabstandet. Bevorzugt weist jede der Gruppen an Kratznasen mehrere Kratznasen auf, die in Vertikalrichtung voneinander beabstandet sind, bevorzugt voneinander vertikal um einen Abstand, der zumindest 50 %, insbesondere zumindest 70 %, insbesondere zumindest 90 % der Erstreckung dieser Kratzfeder entlang der Vertikalrichtung beträgt. Insbesondere sind sämtliche Kratznasen einer Kratzfeder an den Längsenden der Kratzfeder angeordnet. Insbesondere ist an jedem Längsende der Kratzfeder zumindest eine der Kratznasen angeordnet. Insbesondere sind an jedem Längsende der Kratzfeder mehrere der Kratznasen angeordnet, wobei zumindest eine, insbesondere mehrere, insbesondere sämtliche dieser Kratznasen zugleich ein vertikales Ende der Kratzfeder ausbilden. Insbesondere bilden die Kratznasen einer Kratzfeder jeweils ein erstes transversales Ende der Kratzfeder aus, wobei insbesondere dieses erste transversale Ende auf einer anderen Seite der Kupplungsseitenwand, an der die Kratzfeder angeordnet ist, in der Betriebsposition angeordnet ist als ein in eine entgegengesetzte Richtung weisendes zweites, von dem ersten in Transversalrichtung abgewandtes transversales Ende dieser Kratzfeder. Bevorzugt ist in der Betriebsposition genau eines der absoluten transversalen Enden der Kratzfeder auf der Kupplungsinnenseite der Kupplungsseitenwand, an der die Kratzfeder befestigt ist, angeordnet, während das andere absolute transversale Ende der Kratzfeder auf einer von der Kupplungsinnenseite wegweisenden Seite dieser Kupplungsseitenwand angeordnet ist. In einer vorteilhaften Ausführungsform liegt die Kratzfeder, insbesondere zumindest eine der mehreren Kratzfedern, in der Betriebsposition an beiden der Tragschienen, also der ersten und der zweiten Tragschiene, insbesondere transversal an. Insbesondere ist die Kratzfeder, insbesondere dadurch, mit beiden der ersten oder mit beiden der zweiten der Tragschienenseitenwände positionsfest verbunden. Bevorzugt ist eine erste Kratzfeder an der ersten Kupplungsseitenwand angeordnet und mit beiden ersten Tragschienenseitenwänden positionsfest verbunden und/oder eine zweite Kratzfeder an der zweiten Kupplungsseitenwand angeordnet und mit beiden zweiten Tragschienenseitenwänden positionsfest verbunden.

Insbesondere sind sämtliche Abschnitte der Kratzfeder, die in der Betriebsposition mit den beiden Tragschienenseitenwänden verbunden sind, um zumindest 20 %, insbesondere zumindest 30 % der Erstreckung der Kratzfeder in Längsrichtung von einem Abschnitt beabstandet, mit dem die Kratzfeder an der Kupplungsinnenseite der Kupplungsseitenwand, an der die Kratzfeder angeordnet ist, positionsfest verbunden ist.

In einer vorteilhaften Ausführungsform umfasst das System ferner einen elektrischen Verbinder, der in der Betriebsposition elektrisch leitend mit den Leitungsdrähten, die insbesondere in dem Innenraum der Tragschienen angeordnet sind, verbunden ist, insbesondere jeweils an einem der Längsenden der ersten Tragschiene und der zweiten Tragschiene. Insbesondere ist mittels des elektrischen Verbinders in der Betriebsposition eine Durchgangsverdrahtung zwischen den in der ersten Tragschiene angeordneten Leitungsdrähten und den in der zweiten Tragschiene angeordneten Leitungsdrähten ausgebildet. Insbesondere weist die mechanische Kupplung einen Befestigungsabschnitt auf, der in Vertikalrichtung außerhalb der vertikalen Erstreckung der Kupplungsseitenwände angeordnet ist. Der Befestigungsabschnitt ist vorzugsweise ausgebildet, in der Betriebsposition sowie insbesondere in einer Montageposition, in der die mechanische Kupplung mit nur einer der ersten oder der zweiten Tragschiene verbunden ist, den elektrischen Verbinder positionsfest zu halten. Insbesondere ist der Befestigungsabschnitt ausgebildet, den elektrischen Verbinder, bezogen auf eine Relativposition zur mechanischen Kupplung, wobei in dieser Relativposition insbesondere eine Verdrehung relativ zur mechanischen Kupplung zugelassen ist, positionsfest, insbesondere formschlüssig und/oder kraftschlüssig zu halten. Insbesondere ist der Befestigungsabschnitt an einem vertikalen Ende des Führungsabschnitts, insbesondere des Halteabschnitts einer der, insbesondere beider Kupplungsseitenwände und/oder an der Kupplungsbrücke ausgebildet. Insbesondere ist der elektrische Verbinder mit dem Befestigungsabschnitt der mechanischen Kupplung ausgehend von einer Position, in der der elektrische Verbinder an einem vertikalen Ende der mechanischen Kupplung angeordnet ist, mittels einer Bewegung in Längsrichtung, durch die der elektrische Verbinder in Eingriff mit dem Befestigungsabschnitt der mechanischen Kupplung gebracht wird, positionsfest verbindbar. Insbesondere ist der Befestigungsabschnitt ausgebildet, in der Betriebsposition einen korrespondierend zu dem Befestigungsabschnitt ausgebildeten Abschnitt des elektrischen Verbinders zu klemmen zum positionsfesten Halten des elektrischen Verbinders relativ zu der mechanischen Kupplung. Insbesondere ist der elektrische Verbinder in der Betriebsposition von jedem der absoluten Längsenden der mechanischen Kupplung entlang der Längsrichtung um einen gleichen Betrag beabstandet. Somit ist der elektrische Verbinder in der Betriebsposition vorzugsweise in der Mitte der mechanischen Kupplung angeordnet. Insbesondere ist der elektrische Verbinder in der Betriebsposition bezogen auf die Längsrichtung innerhalb der Erstreckung eines Abschnitts der ersten Tragschiene und eines Abschnitts der zweiten Tragschiene angeordnet. Insbesondere sind die Kratzfeder und der elektrische Verbinder in der Betriebsposition bezogen auf die Längsrichtung innerhalb eines solchen Erstreckungsbereichs angeordnet. Insbesondere sind die Kratzfeder und der elektrische Verbinder in der Betriebsposition bezogen auf die Vertikalrichtung zwischen zwei entgegengesetzten absoluten vertikalen Enden der ersten Tragschiene und zwei entgegengesetzten absoluten vertikalen Enden der zweiten Tragschiene angeordnet. Insbesondere sind in der Betriebsposition die mechanische Kupplung, die Kratzfeder, bzw. sämtliche der Kratzfedern und der elektrische Verbinder von der ersten Tragschiene und von der zweiten Tragschiene zumindest abschnittsweise umschlossen.

Bevorzugt ist die Kratzfeder des Systems elektrisch leitfähig ausgebildet, insbesondere ist die Kratzfeder aus einem Metall, insbesondere blechförmig ausgebildet. Insbesondere ist die Kratzfeder in der Betriebsposition über einen Abschnitt, mit dem sie an einer der Tragschienenseitenwände anliegt, mit dieser Tragschienenseitenwand elektrisch leitend verbunden. Insbesondere ist die erste Tragschienenseitenwand der ersten Tragschiene und die erste Tragschienenseitenwand der zweiten Tragschiene in der Betriebsposition über die Kratzfeder elektrisch leitend verbunden. Insbesondere ist die zweite Tragschienenseitenwand der ersten Tragschiene und die zweite Tragschienenseitenwand der zweiten Tragschiene in der Betriebsposition über eine weitere Kratzfeder elektrisch leitend verbunden. Insbesondere sind in der Betriebsposition die erste Tragschiene und die zweite Tragschiene mittels der mechanischen Kupplung elektrisch leitend verbunden. Dadurch ist insbesondere eine besonders verlustarme elektrisch leitende Verbindung zwischen den beiden Tragschienen über die mechanische Kupplung ermöglicht.

Die Erfindung umfasst ferner ein Set umfassend eine mechanische Kupplung und eine Tragschiene des Systems, wobei die mechanische Kupplung sämtliche erfindungsgemäße Merkmale der mechanischen Kupplung des Systems aufweist und die Tragschiene sämtliche erfindungsgemäße Merkmale der ersten Tragschiene oder der zweiten Tragschiene des Systems aufweist.

Die Erfindung umfasst ferner eine mechanische Kupplung des erfindungsgemäßen Systems, die eine erste und eine zweite Kupplungsseitenwand umfasst, die insbesondere durch eine Kupplungsbrücke verbunden sind, wobei die mechanische Kupplung zumindest eine aus einer Ruhelage federelastisch auslenkbare Kratzfeder aufweist, die an zumindest einer der Kupplungsseitenwände angeordnet ist. Insbesondere sind die erste Kupplungsseitenwand, die zweite Kupplungsseitenwand und die Kupplungsbrücke integral aus einem Bauteil, insbesondere einem Blech, gefertigt. Insbesondere ist die Kratzfeder separat von der ersten Kupplungsseitenwand, der zweiten Kupplungsseitenwand und der Kupplungsbrücke ausgebildet. Insbesondere ist die Kratzfeder einteilig, insbesondere aus einem Blech gefertigt. Insbesondere weist die Kratzfeder eine geringere Blechdicke auf als sämtliche weitere aus einem Blech gefertigte Komponenten der mechanischen Kupplung, insbesondere als die erste und die zweite Kupplungsseitenwand sowie insbesondere die Kupplungsbrücke.

Ferner umfasst die Erfindung eine Leuchte, hergestellt mit einem erfindungsgemäßen System. Die Leuchte ist erfindungsgemäß dadurch gebildet, dass sich das erfindungsgemäße System in der Betriebsposition befindet. Ferner umfasst die Erfindung ebenfalls eine Leuchtenanordnung, umfassend mehrere erfindungsgemäße Leuchten, die insbesondere relativ zueinander festgelegt und vorzugsweise miteinander elektrisch leitend verbunden sind.

Die Erfindung umfasst weiterhin ein Verfahren zur Herstellung einer erfindungsgemäßen Leuchte mit einem erfindungsgemäßen System. Zur Herstellung der erfindungsgemäßen Leuchte wird ausgehend von einer Montageposition einer mechanischen Kupplung und einer ersten Tragschiene, in der die mechanische Kupplung an einem Längsende der ersten Tragschiene positionsfest fixiert ist, zum Herstellen der Leuchte eine zweite Tragschiene mittels einer Fügebewegung positionsfest an der mechanischen Kupplung fixiert wird, unter federelastischer Auslenkung einer der mechanischen Kupplung zugeordneten Kratzfeder zur Fixierung der Längsenden der beiden Tragschienen relativ zueinander über die mechanische Kupplung. Insbesondere ist die mechanische Kupplung in der Montageposition mit ihrer ersten Kupplungsseitenwand an einer ersten Tragschienenseitenwand der ersten Tragschiene und mit ihrer zweiten Kupplungswand an einer zweiten Tragschienenseitenwand der ersten Tragschiene angeordnet. Bevorzugt ist in der Montageposition die mechanische Kupplung bezogen auf die Vertikalrichtung und die Transversalrichtung relativ zu der ersten Tragschiene formschlüssig fixiert, insbesondere ist die mechanische Kupplung relativ zur ersten Tragschiene an der ersten Tragschiene bezogen auf die Längsrichtung kraftschlüssig fixiert. Besonders bevorzugt liegt in der Montageposition die Kratzfeder der mechanischen Kupplung an der ersten Tragschiene an, insbesondere unter federelastischer Auslenkung der Kratzfeder entlang der Auslenkungsrichtung, insbesondere in Transversalrichtung. Als federelastische Auslenkbarkeit wird eine materialabhängige Eigenschaft bezeichnet, bei der durch Aufbringen einer externen Kraft eine Auslenkung entlang einer Auslenkungsrichtung über einen Auslenkungsweg erfolgt unter Ausbildung einer der externen Kraft entgegengerichteten inhärenten Federkraft, wobei bei Wegnahme der externen Kraft die Auslenkung wieder in die Ruhelage zurückkehrt unter Abbau der inhärenten Federkraft, wobei vorzugsweise die Rückkehr in die Ruhelage nur mit einer vernachlässigbaren Hysterese behaftet ist. Insbesondere erfolgt durch die federelastische Auslenkung keine plastische Deformation des federelastisch ausgelenkten Abschnitts. Insbesondere ist in der Montageposition die mechanische Kupplung insbesondere mit ihrer ersten Kupplungsseitenwand und ihrer zweiten Kupplungsseitenwand, insbesondere mit den Halteabschnitten der ersten Kupplungsseitenwand und der zweiten Kupplungsseitenwand, abschnittsweise bezogen auf die Längsrichtung in einem Endbereich der ersten Tragschiene angeordnet. Insbesondere ist zumindest ein Abschnitt der Kratzfeder in der Montageposition bezogen auf die Längsrichtung in dem Endbereich der ersten Tragschiene angeordnet. Insbesondere erstreckt sich der Endbereich der ersten Tragschiene von einem Längsende der ersten Tragschiene in Längsrichtung, insbesondere über weniger als 20 % der Erstreckung der ersten Tragschiene in Längsrichtung, insbesondere weniger als 10 % der Erstreckung der ersten Tragschiene in Längsrichtung von dem Längsende der ersten Tragschiene weg. Insbesondere verläuft die Fügebewegung ausgehend von einer ersten Position, in der die erste Tragschiene und die zweite Tragschiene relativ zueinander parallel angeordnet und insbesondere entlang der Längsrichtung voneinander beabstandet sind, zu der Betriebsposition, wobei insbesondere in der Betriebsposition die erste Tragschiene und die zweite Tragschiene jeweils mit einem ihrer Längsenden mittels der mechanischen Kupplung miteinander verbunden sind, wobei die erste und die zweite Tragschiene mit ihren Längsenden insbesondere unmittelbar aneinander anliegen. Insbesondere ist in der Betriebsposition eine Bewegung der ersten Tragschiene relativ zur zweiten Tragschiene entlang zumindest der Vertikal- und Transversalrichtung entlang der Längsrichtung formschlüssig gesperrt. Insbesondere ist eine Bewegung der ersten Tragschiene relativ zur zweiten Tragschiene entlang der Längsrichtung in der Betriebsposition kraftschlüssig gehemmt. Insbesondere verläuft die Fügebewegung zwischen der ersten Position und der Betriebsposition entlang der Längsrichtung, insbesondere als geradlinige, insbesondere als ununterbrochene Bewegung. Insbesondere ist in der Betriebsposition die mechanische Kupplung zu gleichen Teilen in einem Abschnitt des durch die erste Tragschiene ausgebildeten Innenraums und einem Abschnitt des durch die zweite Tragschiene ausgebildeten Innenraums angeordnet. Insbesondere liegt in der Betriebsposition die Kratzfeder an einer der Tragschienenseitenwände der zweiten Tragschiene an unter federelastischer Auslenkung der Kratzfeder, insbesondere des Federabschnitts der Kratzfeder und insbesondere unter Erzeugung einer in Richtung der Tragschienenseitenwand, an der die Kratzfeder anliegt, gerichteten Federkraft. Insbesondere ist in der Betriebsposition die Kratzfeder durch ihre Anlage an der ersten Tragschiene jeweils federelastisch ausgelenkt. Insbesondere wird unter Ausführung der Fügebewegung ausgehend von der ersten Position insbesondere zunächst die mechanische Kupplung mit ihren Kupplungsseitenwänden, insbesondere mit ihren Halteabschnitten mit der zweiten Tragschiene verbunden. Vorzugsweise wird, insbesondere nachdem die mechanische Kupplung mit der zweiten Tragschiene verbunden wurde, die Kratzfeder der mechanischen Kupplung mit der zweiten Tragschiene verbunden unter federelastischer Auslenkung der Kratzfeder, insbesondere des Federabschnitts der Kratzfeder. Bevorzugt wird, insbesondere nachdem die mechanische Kupplung mit der ersten Tragschiene und mit der zweiten Tragschiene verbunden ist, ein elektrischer Verbinder, der vorzugsweise in der Montageposition mit der mechanischen Kupplung und mit den in der ersten Tragschiene angeordneten Leitungsdrähten verbunden ist mit in der zweiten Tragschiene angeordneten Leitungsdrähten elektrisch leitend verbunden, insbesondere unter Ausbildung einer Durchgangsverdrahtung zwischen den Leitungsdrähten, die in der ersten Tragschiene angeordnet sind und den Leitungsdrähten, die in der zweiten Tragschiene angeordnet sind. Allgemein ist mit "vertikal" ein Bezug auf eine Richtung entlang der Vertikalrichtung, mit "transversal" ein Bezug auf eine Richtung entlang der Transversalrichtung und mit "längs" ein Bezug auf eine Richtung entlang der Längsrichtung gemeint. Entsprechend bezieht sich eine Längserstreckung allgemein auf eine Erstreckung entlang der Längsrichtung, eine Transversalerstreckung allgemein auf eine Erstreckung in Transversalrichtung und eine Vertikalerstreckung allgemein auf eine Erstreckung entlang der Vertikalrichtung. Gleichermaßen ist mit einem Längsende ein Ende entlang der Längsrichtung, mit einem Vertikalende ein Ende entlang der Vertikalrichtung und mit einem Transversalende ein Ende entlang der Transversalrichtung gemeint. Insbesondere verlaufen Transversalrichtung, Vertikalrichtung und Längsrichtung senkrecht zueinander. Allgemein ist mit den in Bezug auf Bestandteile des Systems genannten Richtungen auf eine Übereinstimmung der Richtungen mit den Richtungen des Systems in der Betriebsposition abgestellt.

Das erfindungsgemäße System, die erfindungsgemäße Leuchte und die erfindungsgemäße Leuchtenanordnung, die Bestandteile des erfindungsgemäßen Systems, insbesondere die erfindungsgemäße mechanische Kupplung, das erfindungsgemäße Set und das erfindungsgemäße Verfahren können jeweils Merkmale aufweisen, die im Zusammenhang mit gattungsgemäßen System erläutert sind und können in verschiedenen vorteilhaften Ausführungsformen jeweils zu einer der anderen erfindungsgemäßen Lösung beschriebene vorteilhafte Merkmale aufweisen.

Die Erfindung wird nachfolgend unter Bezugnahme auf vier Figuren anhand eines Ausführungsbeispiels näher erläutert.

Es zeigen:
- Figur 1: eine schematische perspektivische Prinzipansicht von Bestandteilen einer Ausführungsform des erfindungsgemäßen Systems in seiner Montageposition;
- Figur 2: eine schematische perspektivische Prinzipansicht der mechanischen Kupplung gemäß der in Figur 1 dargestellten Ausführungsform;
- Figur 3: eine schematische Schnittansicht durch die mechanische Kupplung gemäß Figur 2;
- Figur 4: eine schematische Prinzipansicht einer Kratzfeder gemäß der Ausführungsform des Systems aus Figur 1;
- Figur 5: eine schematische Prinzipansicht von Bestandteilen einer weiteren Ausführungsform des erfindungsgemäßen Systems in seiner Betriebsposition;
- Figur 6: verschiedene schematische Prinzipansichten von Kupplung und Kratzfeder der Ausführungsform gemäß Figur 5;
- Figur 7: verschiedene schematische Prinzipansichten der Kratzfeder der Ausführungsform gemäß Figur 5.

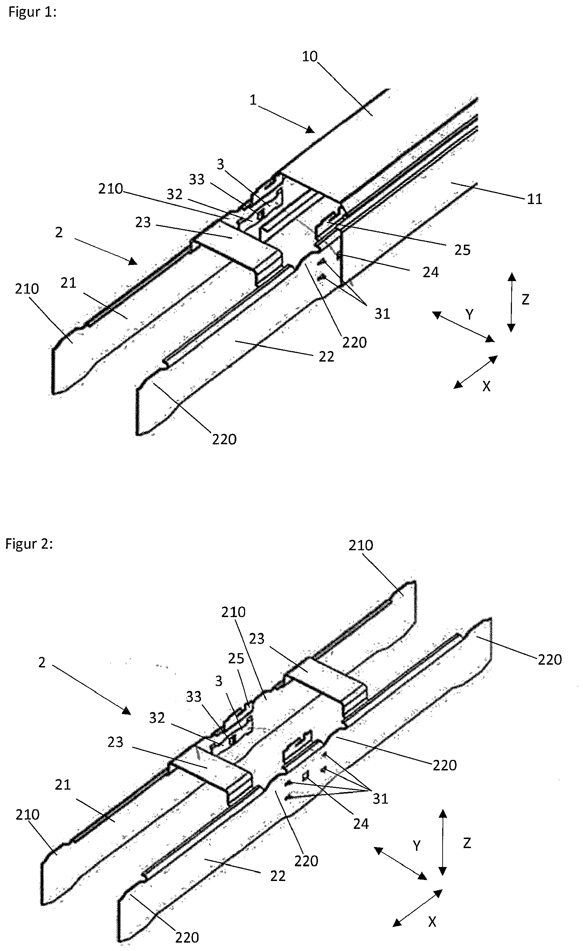

In Figur 1 ist ein Ausführungsbeispiel des erfindungsgemäßen Systems in einer perspektivischen Prinzipansicht in der Montageposition dargestellt. Die Bestandteile des Systems befinden sich in definierter Anordnung zueinander, wobei in Figur 1 auf eine Darstellung der zweiten Tragschiene des Systems verzichtet ist. Das System umfasst entsprechend eine erste Tragschiene 1 und eine zweite, nicht dargestellte Tragschiene sowie eine mechanische Kupplung 2, die mehrere Kratzfedern 3 aufweist. Die dargestellte erste Tragschiene 1 sowie die zweite Tragschiene umfassen jeweils einen Tragschienenboden 10 und zwei Tragschienenseitenwände 11, wobei sich die Tragschienenseitenwände entlang einer Vertikalrichtung Z erstrecken und mittels des Tragschienenbodens entlang der Transversalrichtung Y miteinander verbunden sind.

Die mechanische Kupplung 2 weist eine erste Kupplungsseitenwand 21 und eine zweite Kupplungsseitenwand 22 auf, wobei die Kupplungsseitenwände 21, 22 voneinander entlang der Transversalrichtung Y beabstandet und mittels einer Kupplungsbrücke 23 verbunden sind. Beide Kupplungsseitenwände 21, 22 weisen jeweils eine Kupplungsinnenseite auf, wobei die Kupplungsinnenseite zu der jeweils transversal gegenüberliegenden Kupplungsseitenwand 21, 22 weist. In der dargestellten Montageposition ist die mechanische Kupplung 2 mit beiden ihrer Kupplungsseitenwände 21, 22 bezogen auf ihre Erstreckung in Längsrichtung X zur Hälfte in einen durch die erste Tragschiene 1 definierten Innenraum eingeschoben. Dabei liegt die mechanische Kupplung 2 an der ersten Tragschiene 1 dergestalt an, dass eine Bewegung der mechanischen Kupplung 2 entlang einer Richtung senkrecht zur Längsrichtung X relativ zu der ersten Tragschiene 1 vermieden ist. Ferner bildet die mechanische Kupplung 2 mit ihren Kupplungsseitenwänden 21, 22 einen Halteabschnitt mit mehreren Teilhalteabschnitten 210, 220 aus, mittels dessen vertikalen Enden sie bezogen auf die Vertikalrichtung Z gegen vertikal gegenüberliegende Abschnitte der ersten Tragschiene 1 presst. Die erste Tragschiene 1 ist entlang der Längsrichtung X langgestreckt ausgebildet, wobei in der Ansicht in Figur 1 auf eine vollständige Darstellung der ersten Tragschiene 1 verzichtet ist. Dargestellt ist entsprechend ein längsendseitiger Abschnitt der ersten Tragschiene 1. Die beiden Kratzfedern 3 liegen unmittelbar an der jeweiligen Kupplungsseitenwand 21, 22 an, wobei jede der Kupplungsseitenwände 21, 22 eine Fixiereinrichtung 24 aufweist, und wobei jede der Kratzfedern 3 eine Halteeinrichtung 33 aufweist, wobei Kratzfedern 3 und die jeweilige Kupplungsseitenwand 21, 22 miteinander positionsfest verbunden sind, indem die Fixiereinrichtung 24 der jeweiligen Kupplungsseitenwand 21, 22 an der Halteeinrichtung 33 der Kraftfedern 3 positionsfest gehalten, bzw. geklemmt ist. Dabei ist jede der Kratzfedern 3 ausschließlich über ihre Halteeinrichtung 33 unmittelbar an der Fixiereinrichtung 24 der jeweiligen Kupplungsseitenwand 21, 22 und somit unmittelbar an der jeweiligen Kupplungsseitenwand 21, 22 fixiert, was erfindungsgemäß allgemein vorteilhaft ist.

Wie insbesondere aus Figur 2 hervorgeht, in der die mechanische Kupplung 2 des erfindungsgemäßen Systems schematisch gezeigt ist, ist die mechanische Kupplung 2 entlang der Längsrichtung X im Wesentlichen symmetrisch aufgebaut. Dabei sind sowohl die Kratzfeder 3 als auch die Kupplungsbrücke 23 in einem mittleren Bereich angeordnet, der bezogen auf die Längsrichtung X von beiden absoluten Längsenden der mechanischen Kupplung 2 mit einem gleichen Abstand beabstandet ist. Die Kupplungsbrücke 23 ist entlang der Längsrichtung X unterbrochen ausgeführt, wobei sich die Unterbrechung bezogen auf die Längsrichtung X zwischen zwei Kupplungsbrückenabschnitten über einen Abschnitt erstreckt, in dem die Kratzfedern 3 und ein Befestigungsabschnitt 25 zur Befestigung eines elektrischen Verbinders ausgebildet sind. Die Kratzfeder 3 weist mehrere Kratznasen 31 auf, die sich entlang der Transversalrichtung Y durch die jeweilige Kupplungsseitenwand 21, 22, an der die jeweilige Kratzfeder 3 angeordnet ist, hindurch erstrecken. Dadurch bilden die Kratznasen 31 jeweils ein absolutes transversales Ende der mechanischen Kupplung 2 aus. Jede der Kratzfedern 3 weist vier der Kratznasen 31 auf, wobei jede der Kratznasen 31 durch eine eigene Durchgangsöffnung durch die jeweilige Kupplungsseitenwand 21, 22 entlang der Transversalrichtung Y hindurch ragt. Dabei ist eine erste Gruppe an Kratznasen 31 umfassend zwei der Kratznasen 31 ausgebildet, in der Betriebsposition an der ersten Tragschiene 1 anzuliegen unter Ausbildung eines Reibschlusses zwischen der Kratzfeder 3 und der ersten Tragschiene 1 und eine zweite Gruppe an Kratznasen 31 umfassend zwei der Kratznasen 31 ausgebildet, in der Betriebsposition entsprechend an der zweiten Tragschiene anzuliegen, wobei die beiden Kratznasen 31 einer jeden Gruppe vertikal voneinander beabstandet sind. Jede der Kratzfedern 3 weist in ihrer Mitte bezogen auf die Längsrichtung X die Halteeinrichtung 33 auf, die bezogen auf die Transversalrichtung Y mit der Fixiereinrichtung 24 der jeweiligen Kupplungsseitenwand 21, 22 kraftschlüssig geklemmt ist. In der vorliegend dargestellten Ausführungsform ist die mechanische Kupplung 2 aus einem Blech gefertigt, wobei die Kupplungsseitenwände 21, 22 und die Kupplungsbrücke 23 aus einem ersten Blechstück und die Kratzfedern 3 aus einem zweiten, gegenüber dem ersten Blechstück dünneren Blechstück hergestellt sind. Die Blechstücke sind dazu jeweils aus einem Halbzeug gestanzt und unter Ausbildung der mechanischen Kupplung 2 und der Kratzfedern 3 umgeformt.

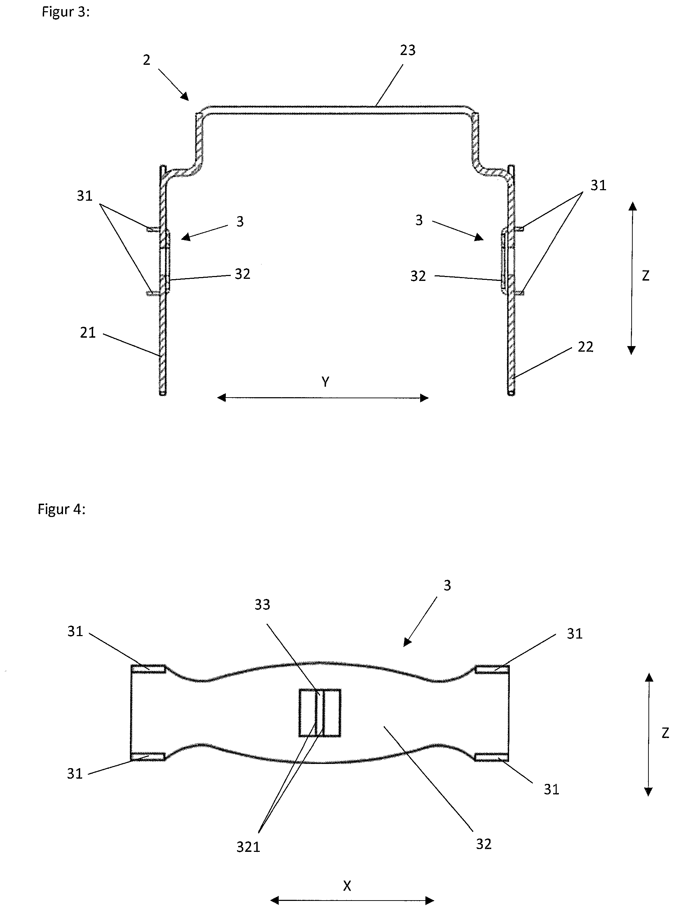

In Figur 3 ist eine schematische Schnittdarstellung der mechanischen Kupplung 2 aus Figur 2 gezeigt. Mit Bezug auf Figur 2 verläuft dabei die Schnittebene entlang der Transversalrichtung Y und der Vertikalrichtung Z und der Vertikalrichtung Z durch die Mitte der mechanischen Kupplung 2. Somit ist die mechanische Kupplung 2 mitsamt ihren Kratzfedern 3 im Bereich der Fixiereinrichtung 24 und der Halteeinrichtung 33 geschnitten. Wie in Figur 3 besonders gut erkennbar ist, sind die Kratzfedern 3 aus einem dünneren Blech gefertigt als die Kupplungsseitenwände 21, 22 und die Kupplungsbrücke 23. Dabei ist auch die Kratzfeder 3 einteilig ausgeführt. Somit sind die Kratznasen 31 um eine Biegelinie umgebogen, sodass sie sich mit ihrer Blechdicke entlang der Vertikalrichtung Z erstrecken, wobei sie jeweils durch eine dazu ausgebildete Durchgangsöffnung in der jeweiligen Kupplungsseitenwand 21, 22 von der Kupplungsinnenseite transversal hindurchragen. Dabei verhalten sich die Kratznasen 31 gegenüber einer auf die Kratznasen 31 entlang der Transversalrichtung Y aufgebrachten externen Kraft starr. Die Kratznasen 31 sind mit der Halteeinrichtung 33 über einen Federabschnitt 32 federelastisch verbunden. Bei einem Aufbringen einer externen in Transversalrichtung Y wirkenden Kraft lenkt sich entsprechend der Federabschnitt 32 der jeweiligen Kratzfeder federelastisch aus.

In Figur 4 ist eine schematische Ansicht einer der Kratzfedern 3 der mechanischen Kupplung 2 aus Figur 2 bzw. Figur 3 gezeigt. Dabei ist erkennbar, dass die Halteeinrichtung 33 mehrere Klemmabschnitte 321 aufweist, die sich ausgehend von einem sie umgebenden Abschnitt des Federabschnitts 32 transversal von der Kratzfeder 3 weg erstrecken. Dabei weisen die Klemmabschnitte 321 entlang der Transversalrichtung Y in eine zu der transversalen Erstreckung der Kratznasen 31 entgegengerichtete Richtung von der jeweiligen Kratzfeder 3 weg. Ist die Kratzfeder 3 an der jeweiligen Kupplungsseitenwand 21, 22 befestigt, ragt ein von der Fixiereinrichtung 24 ausgebildeter Fixierabschnitt transversal in einen Hohlraum, der durch die Klemmabschnitte 321 entlang der Längsrichtung X umschlossen ist. Dabei ragen in dieser Position die Klemmabschnitte 321 transversal von der Kupplungsseitenwand 21, 22, an der die jeweilige Kratzfeder 3 befestigt ist, weg in Richtung der jeweiligen Kupplungsseitenwand 21, 22 gegenüberliegenden Kupplungsseitenwand 21, 22. Dadurch wirken die Klemmabschnitte 321 auf den in dem Hohlraum angeordneten Fixierabschnitt der Führungseinrichtung 24 bezüglich ihrer Klemmwirkung selbstverstärkend gegen eine Lösebewegung zum Lösen der jeweiligen Kratzfeder 3 von der jeweiligen Kupplungsseitenwand 21, 22 entlang der Transversalrichtung X. Ferner ist dadurch ein insbesondere versehentliches Lösen der Kratzfeder 3 von der jeweiligen Kupplungsseitenwand 21, 22 im Falle eines federelastischen Auslenkens der Kratzfeder 3 mit ihrem Federabschnitt 32 entlang einer Richtung in Transversalrichtung Y verhindert.

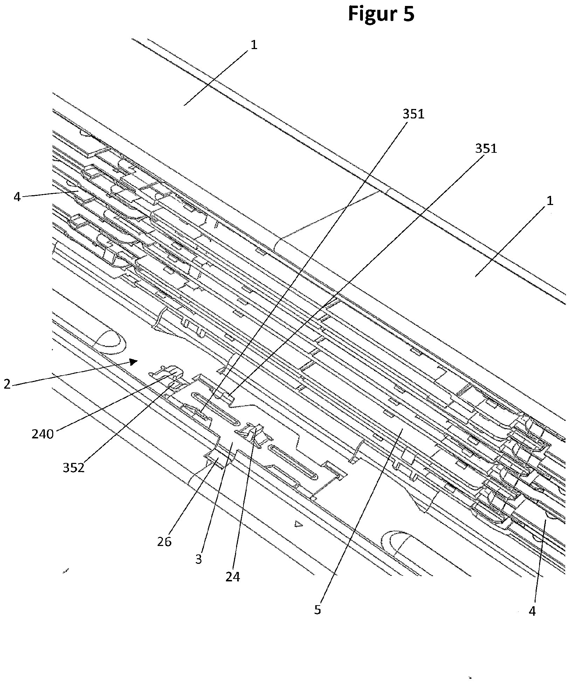

In Figur 5 ist ein weiteres Ausführungsbeispiel des erfindungsgemäßen Systems in einer perspektivischen Prinzipansicht in der Betriebsposition dargestellt. Das in Figur 5 dargestellte Ausführungsbeispiel umfasst Stromleitschienen 4, die wie oben zu gattungsgemäßen Stromleitschienen erläutert ausgebildet sind. Entsprechend weisen die Stromleitschienen 4 jeweils in Längsrichtung X langgestreckte Kanäle auf, in denen wie oben erläutert jeweils ein Leitungsdraht angeordnet ist. In anderen Ausführungsbeispielen können auch in den Kanälen jeweils mehrere, zueinander versetzt angeordnete Leitungsdrähte vorgesehen sein. An jeder Tragschiene 1 ist jeweils genau eine Stromleitschiene 4 befestigt. Das System umfasst ferner einen elektrischen Verbinder 5. In der Betriebsposition sind die Stromleitschienen 4, die an den beiden Tragschienen 1 befestigt sind, über den elektrischen Verbinder 5 dergestalt miteinander verbunden, dass jeweils ein Leitungsdraht der ersten Stromleitschiene mit einem Leitungsdraht der zweiten Stromleitschiene elektrisch leitend verbunden ist. Das Vorsehen eines solchen elektrischen Verbinders und von Stromleitschienen ist erfindungsgemäß allgemein vorteilhaft. So kann beispielsweise auch das Ausführungsbeispiel gemäß Figur 1 entsprechende Stromleitschienen 4 und einen entsprechenden elektrischen Verbinder 5 umfassen. In der in Figur 5 dargestellten Betriebsposition sind die Tragschienen 1 über die mechanische Kupplung 2 positionsfest zueinander fixiert.

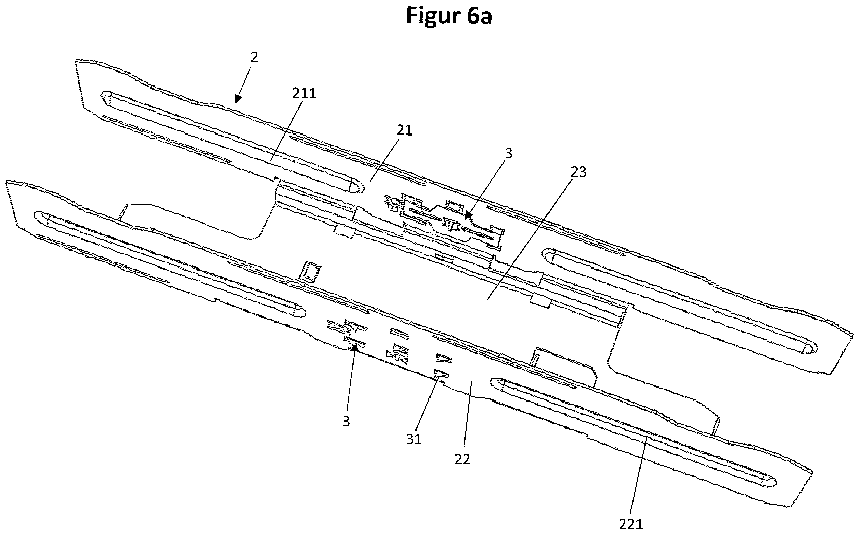

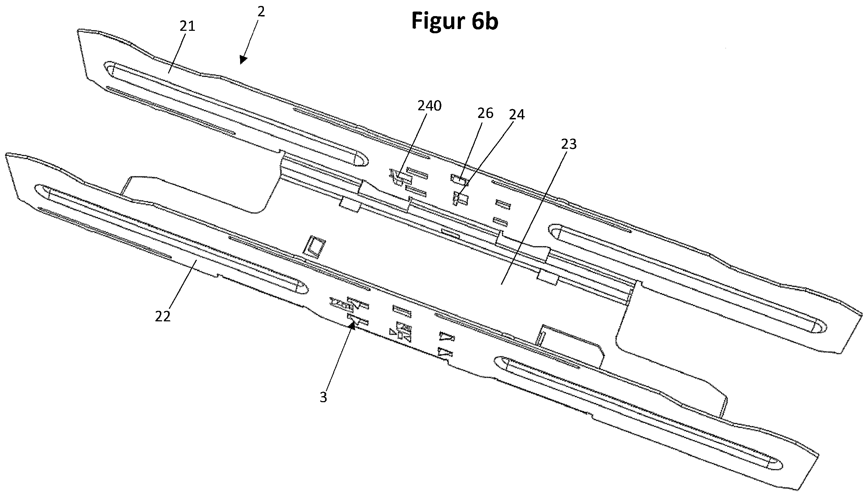

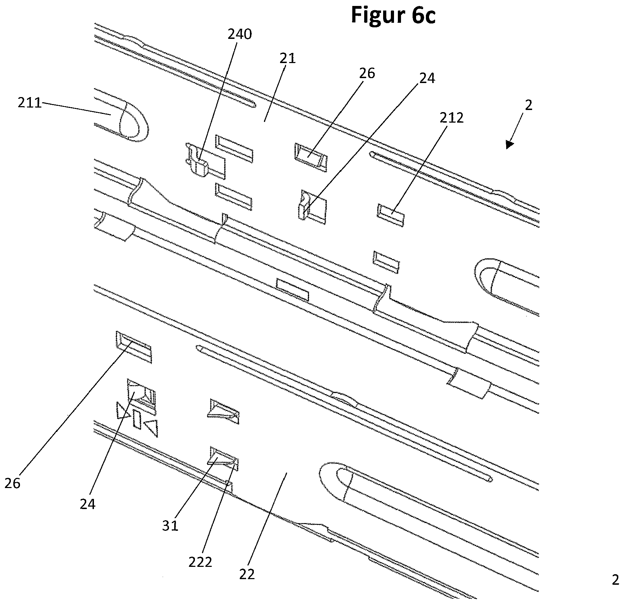

In Figur 6 umfassend die Figuren 6a, 6b und 6c sind verschiedene Komponenten des Systems in der Position dargestellt, die sie in der in Figur 5 gezeigten Betriebsposition des Systems innehaben. Während in Figur 6a beide Kratzfedern 3 in ihrer Betriebsposition gezeigt sind, ist in Figur 6b nur die an eine der Kupplungsseitenwände 22 angeordnete Kratzfeder 3 darstellt. Die Darstellungen in Figur 6 sind so gewählt, dass Details der mechanischen Kupplung 2 und im Besonderen die Kratzfedern 3 der mechanischen Kupplung 2 zu erkennen sind, da hierin der wesentliche Unterschied im Vergleich zum Ausführungsbeispiel gemäß Figur 5 liegt. So weisen die Kupplungsseitenwände 21, 22, wie aus Figur 6 zu erkennen, Versteifungsumformungen 211, 221 auf, die sich in Längsrichtung X langgestreckt erstrecken. Das Vorsehen solcher Versteifungsumformungen 211, 221 ist erfindungsgemäß allgemein vorteilhaft, und wie bei dem Ausführungsbeispiel gemäß Figur 5 realisiert, weisen bevorzugt die Kupplungsseitenwände 21, 22 jeweils zwei Versteifungsumformungen 211, 221 auf, wobei an jeder der Kupplungsseitenwände 21, 22 jeweils eine Kratzfeder 3 zwischen ihren beiden Versteifungsumformungen 211, 221 angeordnet und von diesen beabstandet ist. Die Kupplungsseitenwände 21, 22 weisen jeweils mehrere Durchgangsöffnungen 212 auf, von denen jede genau einer der Kratznasen 31 zugeordnet ist, wobei sich die Kratznasen 31 in der Betriebsposition durch die ihnen jeweils zugeordnete Durchgangsöffnung 212 hindurch erstrecken und somit transversal über die Kupplungsseitenwand 21, 22 vorstehen. Die Kupplungsseitenwände 21, 22 weisen ferner, wie insbesondere aus den Figuren 5, 6b und 6c zu erkennen, jeweils einen Anlageabschnitt 26 auf, der in der in Figur 5 gezeigten Betriebsposition als Anschlag für die beiden Tragschienen 1 dient. Die beiden Tragschienen 1 bilden in der Betriebsposition somit gemeinsam eine Aussparung auf, in der der Anlageabschnitt 26 angeordnet ist. Der Anlageabschnitt 26 ist erfindungsgemäß allgemein vorteilhaft und verhindert, dass die mechanische Kupplung 2 in Längsrichtung X zu weit in eine der Tragschienen 1 eingeschoben wird und somit nicht mehr weit genug von dieser vorsteht, um eine zuverlässige Fixierung der anderen Tragschiene 1 in der Betriebsposition zu ermöglichen. Besonders bevorzugt, und bei dem Ausführungsbeispiel gemäß Figur 5 umgesetzt, ist der Anlageabschnitt 26 relativ zum erläuterten Führungsabschnitt bzw. Halteabschnitt der mechanischen Kupplung 2 mit Bezug auf eine Drehung um die Längsachse abgewinkelt, vorliegend und allgemein vorteilhaft um einen Winkel von mindestens 10°, insbesondere mindestens 20°. Hierdurch ist auf einfache Weise ein Anschlag für die Tragschienen 1 ausgebildet.

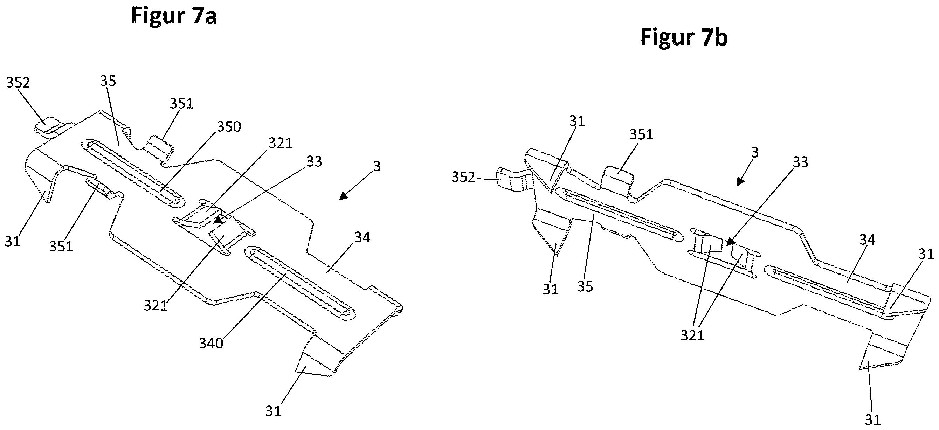

Wie aus Figur 6 sowie Figur 7 umfassend die Figuren 7a und 7b ersichtlich ist ferner die Kratzfeder 3 des Systems gemäß Figur 5 anders ausgestaltet als die Kratzfeder 3 des Systems gemäß Figur 1. Die Kratzfeder 3 weist eine Halteeinrichtung 33 auf, die zwei Klemmabschnitte 321 umfasst, über die sie in der in Figur 6 gezeigten Betriebsposition an der Fixiereinrichtung 24 der ihr zugeordneten Kupplungsseitenwand 21, 22 verklemmt fixiert gehalten ist. Dabei tauchen ihre Kratznasen 31 durch jeweils eine der jeweiligen Kratznase 31 zugeordnete, in der Kupplungsseitenwand 21, 22 vorgesehene Durchführungsöffnung 212 hindurch, so dass sich die Kratznasen 31 an der transversalen Außenseite der jeweiligen Kupplungsseitenwand 21, 22 über diese Kupplungsseitenwand 21, 22 hinaus erstrecken, während die Kratzfeder 3 weit überwiegend an der Innenseite der Kupplungsseitenwand 21, 22 angeordnet ist, erfindungsgemäß allgemein vorteilhaft zumindest mit ihrer Halteeinrichtung 33 und ihrem Federabschnitt 32 und ihrem Anschlagsabschnitt 352 und ihrem Betätigungsabschnitt 351 an der Innenseite der Kupplungsseitenwand 21, 22 angeordnet ist. Die Haltefeder 3 weist einen Federabschnitt 32 auf, über den die Kratznasen 31 mit der Halteeinrichtung 33 verbunden sind. Der Federabschnitt 32 erstreckt sich an beiden Längsseiten der Halteeinrichtung 33 mit jeweils einem Unterfederabschnitt 34, 35, was erfindungsgemäß allgemein vorteilhaft ist, wobei vorteilhaft an jedem von der Halteeinrichtung 33 abgewandten Längsende des jeweiligen Unterfederabschnitts 34, 35 jeweils ein Paar an Kratznasen 31 vorgesehen ist. In den Unterfederabschnitten 34, 35 weist die Kratzfeder 3 jeweils eine Versteifungsumformung 340, 350 auf, die sich in Längsrichtung X langgestreckt erstreckt, was allgemein vorteilhaft ist. Hierdurch ist eine hohe Federsteifigkeit der Kratzfeder 3 gewährleistet. Die Kratzfeder 3 weist ferner an einem ihrer Längsenden einen Anschlagsabschnitt 352 auf, wohingegen sie an ihrem gegenüberliegenden Längsende keinen solchen Anschlagsabschnitt 352 aufweist. Der Anschlagsabschnitt 352 ist korrespondierend zu einer an der Innenseite der Kupplungsseitenwand 21, 22 ausgebildeten Anschlagseinrichtung 240 ausgebildet. In der Betriebsposition hintergreift die Anschlagseinrichtung 240 die Kratzfeder 3 auf Höhe ihres Anschlagsabschnitts 352 unter Beschränkung einer Bewegung der Kratzfeder 3 relativ zur Kupplungsseitenwand 21, 22, vorliegend auf Höhe des Anschlagsabschnitts 352. Hierdurch ist effektiv verhindert, dass die Kratzfeder an ihrem Längsende, an dem der Anschlagsabschnitt 352 angeordnet ist, zu weit von der Kupplungsseitenwand 21, 22 wegbewegt wird, beispielsweise durch Verwendung eines entsprechenden Lösewerkzeugs, wie etwa eines Schraubendrehers, und sich ihre Halteeinrichtung 33 von der Fixiereinrichtung 24 ungewollt lösen kann. Der Anschlagsabschnitt 352 befindet sich in der Betriebsposition somit in Transversalrichtung Y zwischen einem ersten Abschnitt der Kupplungsseitenwand 21, 22, der durch die Anschlagseinrichtung 240 ausgebildet ist, und einem zweiten Abschnitt, der durch den Führungsabschnitt der Kupplungsseitenwand 21, 22 ausgebildet ist. Dabei überlappt der Anschlagsabschnitt 352 senkrecht zur Transversalrichtung Y mit der Anschlagseinrichtung 240. Zur einfachen Auslenkung der Kratzfeder 3 zum Lösen der Kratznasen 31 ausgehend von der Betriebsposition von den Tragschienenseitenwänden einer der Tragschienen 1 weist die Kratzfeder 3 ferner Betätigungsabschnitte 351 auf. Die Betätigungsabschnitte 351 sind in Längsrichtung X zwischen dem Paar an Kratzfedern 31 und der Halteeinrichtung 33 vorgesehen, vorliegend auf Höhe einer Einschnürung des Unterfederabschnitts 35, was erfindungsgemäß allgemein vorteilhaft ist. Durch die Betätigungsabschnitte 351 kann auf einfache Weise ein Schraubendreher zwischen der Innenseite der Kupplungsseitenwand 21, 22 und einem der Betätigungsabschnitte 351 gebracht werden und durch Verdrehen die Kratzfeder 3 ausgelenkt werden, während das Zusammenwirken von Anschlagsabschnitt 352 und Anschlagseinrichtung 240 ein zu weites Auslenken der Kratzfeder 3 bei Betätigung der Betätigungsabschnitte 351 effektiv verhindert.

### Bezugszeichenliste

- 1: erste Tragschiene
- 2: mechanische Kupplung
- 3: Kratzfeder
- 4: Stromleitschiene
- 5: elektrischer Verbinder
- 10: Tragschienenboden
- 11: Tragschienenseitenwand
- 21: erste Kupplungsseitenwand
- 22: zweite Kupplungsseitenwand
- 23: Kupplungsbrücke
- 24: Fixiereinrichtung
- 25: Befestigungsabschnitt
- 26: Anlageabschnitt
- 31: Kratznase
- 32: Federabschnitt
- 33: Halteeinrichtung
- 210: Teilhalteabschnitt
- 211: Versteifungsumformung
- 212: Durchgangsöffnung
- 220: Teilhalteabschnitt
- 221: Versteifungsumformung
- 321: Klemmabschnitt
- 340: Versteifungsumformung
- 350: Versteifungsumformung
- 351: Betätigungsabschnitt
- 352: Anschlagsabschnitt
- X: Längsrichtung
- Y: Transversalrichtung
- Z: Vertikalrichtung

## Patentansprüche

1. System zur Realisierung einer in einer Längsrichtung (X) langgestreckten Leuchte, das System umfassend eine erste und eine zweite Tragschiene (1), die sich mit ihrer Längserstreckung jeweils in der Längsrichtung (X) zwischen ihren jeweiligen Längsenden erstrecken, und eine mechanische Kupplung (2), wobei die Tragschienen (1) jeweils einen Tragschienenboden und eine sich von dem Tragschienenboden vertikal weg erstreckende erste und zweite Tragschienenseitenwand aufweisen und jeweils zur Aufnahme einer in der Längsrichtung (X) langgestreckten Stromleitschiene mit mehreren in Längsrichtung (X) verlaufenden Leitungsdrähten ausgebildet sind, wobei die mechanische Kupplung (2) in einer Betriebsposition an einem Längsende der ersten Tragschiene (1) und an einem Längsende der zweiten Tragschiene fixiert ist und diese Längsenden der beiden Tragschienen relativ zueinander fixiert,
**dadurch gekennzeichnet, dass**
die mechanische Kupplung (2) eine in der Betriebsposition an den beiden ersten Tragschienenseitenwänden positionsfest fixierte erste Kupplungsseitenwand (21) und eine in der Betriebsposition an den beiden zweiten Tragschienenseitenwänden positionsfest fixierte zweite Kupplungsseitenwand (22) umfasst, wobei die Kupplungsseitenwände (21, 22) jeweils eine Kupplungsinnenseite aufweisen, wobei die Kupplungsinnenseiten in der Betriebsposition zueinander weisen, wobei die mechanische Kupplung (2) zumindest eine aus einer Ruhelage federelastisch auslenkbare Kratzfeder (3) umfasst, die an zumindest einer der Kupplungsseitenwände (21, 22) angeordnet ist, wobei die Kratzfeder (3) in der Betriebsposition ausgelenkt ist und an zumindest einer der Tragschienenseitenwände anliegt.

2. System nach Anspruch 1,
**dadurch gekennzeichnet, dass**
die erste und die zweite Kupplungsseitenwand (21, 22) durch zumindest eine Kupplungsbrücke (23) verbunden sind, wobei insbesondere die Kupplungsbrücke (23) die Kupplungsseitenwände (21, 22) starr miteinander verbindet unter Festlegung eines Abstands zwischen den Kupplungsseitenwänden (21, 22).

3. System nach Anspruch 1 oder 2,
**dadurch gekennzeichnet, dass**
die Kratzfeder (3) eine Kratznase (31) aufweist, die in der Betriebsposition unmittelbar gegen jeweils eine der Tragschienenseitenwände presst, wobei insbesondere die Kratzfeder (3) einen Federabschnitt (32) aufweist, der sich von der Kratznase (31) weg erstreckt, wobei jeder der Federabschnitte (32) in der Betriebsposition entlang einer Auslenkungsrichtung senkrecht zur Längsrichtung (X) gegenüber der Ruhelage federelastisch ausgelenkt ist, wobei die Kratznase (31) in einem sich entlang der Auslenkungsrichtung von dem Federabschnitt (32) wegerstreckenden Abschnitt starr ist.

4. System nach einem der vorangehenden Ansprüche,
**dadurch gekennzeichnet, dass**
die Kratzfeder (3) separat von der ersten und von der zweiten Kupplungsseitenwand (21, 22) ausgebildet ist, wobei insbesondere die mechanische Kupplung (2) mehrere Kratzfedern (3) umfasst, die jeweils separat von der ersten und von der zweiten Kupplungsseitenwand (21, 22) ausgebildet sind und jeweils an einer der Kupplungsseitenwände (21, 22) befestigt sind.

5. System nach einem der Ansprüche 3 oder 4,
**dadurch gekennzeichnet, dass**
an zumindest einer, insbesondere jeder, der Kupplungsseitenwände (21, 22) zumindest eine der Kratzfedern (3) angeordnet ist, wobei in der Betriebsposition an jeder der Tragschienenseitenwände, an der die jeweilige Kupplungsseitenwand (21, 22) fixiert ist, jeweils zumindest eine Kratznase (31) der zumindest einen an dieser Kupplungsseitenwand (21, 22) angeordneten Kratzfeder (3) anliegt unter Ausbildung einer die Tragschienen (1) in der Betriebsposition zueinander fixierenden reibschlüssigen Verbindung zwischen den Tragschienenseitenwänden.

6. System nach einem der vorangehenden Ansprüche,
**dadurch gekennzeichnet, dass**
die Kratzfeder (3) an der Kupplungsinnenseite der jeweiligen Kupplungsseitenwand (21, 22) angeordnet ist, wobei die Kratzfeder (3) durch eine in dieser ausgebildeten Durchgangsöffnung (212) hindurchragt.

7. System nach einem der vorangehenden Ansprüche,
**dadurch gekennzeichnet, dass**
zumindest eine der Kupplungsseitenwände (21, 22) eine Fixiereinrichtung (24) und die Kratzfeder (3) eine zu der Fixiereinrichtung (24) korrespondierend ausgebildete Halteeinrichtung (33) umfasst, wobei in der Betriebsposition die Fixiereinrichtung (24) mit der Halteeinrichtung (33) verbunden ist unter positionsfester Fixierung der Kratzfeder (3) an der Kupplungsseitenwand (21, 22), wobei insbesondere die Fixiereinrichtung (24) durch einen Fixierabschnitt der Kupplungsseitenwand (21, 22) gebildet ist, der sich senkrecht zur Längsrichtung (X) von einem Führungsabschnitt der Kupplungsseitenwand (21, 22), der sich in Längsrichtung (X) langgestreckt erstreckt und in der Betriebsposition mit seinen beiden vertikalen Enden an beiden Tragschienen (1) anliegt, weg erstreckt, wobei die Halteeinrichtung (33) zumindest zwei in der Betriebsposition aufeinander gegenüberliegenden Seiten des Fixierabschnitts angeordnete und insbesondere mit ihren transversalen Enden von der Kupplungsseitenwand (21, 22) weg weisende Klemmabschnitte (321) aufweist, die in der Betriebsposition mit dem Fixierabschnitt unmittelbar verbunden sind zum Halten der Kratzfeder (3) an der Kupplungsseitenwand (21, 22).

8. System nach Anspruch 7,
**dadurch gekennzeichnet, dass**
die Kratzfeder (3) mehrere Kratznasen (31) aufweist, wobei die Kratznasen (31) der Kratzfeder (3) gleichmäßig um die Fixiereinrichtung (24) verteilt angeordnet sind.

9. System nach einem der Ansprüche 7 oder 8,
**dadurch gekennzeichnet, dass**
die Kupplungsseitenwand (21, 22), die die Fixiereinrichtung (24) umfasst, ferner eine Anschlagseinrichtung (240) umfasst, die die Kratzfeder (3) hintergreift unter Beschränkung einer Bewegung der Kratzfeder (3) relativ zur Kupplungsseitenwand (21, 22).

10. System nach Anspruch 9,
**dadurch gekennzeichnet, dass**
die Kupplungsseitenwand (21, 22) mit einem ersten Abschnitt an einer ersten transversalen Seite der Kratzfeder (3) und mit einem zweiten Abschnitt an einer zweiten transversalen Seite der Kratzfeder (3) angeordnet ist, wobei die Anschlagseinrichtung (240) den ersten Abschnitt ausbildet, wobei insbesondere die Kratzfeder (3) einen Anschlagsabschnitt (352) aufweist, der senkrecht zur Transversalrichtung (Y) mit der Anschlagseinrichtung (240) überlappt und insbesondere in der Betriebsposition von der Anschlagseinrichtung (240) beabstandet ist, wobei insbesondere der Anschlagsabschnitt (352) an einem ersten Längsende der Kratzfeder (3) vorgesehen ist, wobei insbesondere das dem ersten Längsende gegenüberliegende zweite Längsende der Kratzfeder (3) an der ersten transversalen Seite der Kratzfeder (3) mit der Kupplungsseitenwand (21, 22) überlappungsfrei ist.

11. System nach einem der Ansprüche 7 bis 10,
**dadurch gekennzeichnet, dass**
die Kratzfeder (3) zu der Halteeinrichtung (33) versetzt, insbesondere entlang der Längsrichtung (X) versetzt, zumindest einen Betätigungsabschnitt (351) aufweist, der in der Betriebsposition von der Kupplungsseitenwand (21, 22), an der die Kratzfeder (3) angeordnet ist, um einen Abstand beabstandet ist, insbesondere zum Ermöglichen eines Einführens eines Schlitzschraubendrehers in den Abstand zum transversalen Auslenken der Kratzfeder (3) ausgehend von der Betriebsposition, wobei insbesondere der zumindest eine Betätigungsabschnitt (350) zwischen dem Anschlagsabschnitt (352) und der Halteeinrichtung (33) angeordnet ist und insbesondere entlang einer linearen Richtung von der Halteeinrichtung (33) zumindest so weit beabstandet ist wie von dem Anschlagsabschnitt (240).

12. System nach einem der vorangehenden Ansprüche,
**dadurch gekennzeichnet, dass**
die Kratzfeder (3) zumindest eine in einer senkrecht zur Transversalrichtung (Y) verlaufenden Richtung langgestreckt ausgebildete Versteifungsumformung (340) aufweist.

13. System nach einem der Ansprüche 3 bis 12,
**dadurch gekennzeichnet, dass**
die Kratznasen (31) voneinander und von der Fixiereinrichtung (24) senkrecht zu einer Richtung, in die die Kratzfeder (3) in der Betriebsposition ausgelenkt ist, beabstandet angeordnet sind.

14. System nach einem der vorangehenden Ansprüche,
**dadurch gekennzeichnet, dass**
die Kratzfeder (3), insbesondere mit ihren Kratznasen (31), in der Betriebsposition an beiden der Tragschienen (1) anliegt und insbesondere mit beiden der ersten oder mit beiden der zweiten Tragschienenseitenwände positionsfest verbunden ist.

15. System nach einem der vorangehenden Ansprüche,
**dadurch gekennzeichnet, dass**
das System ferner einen elektrischen Verbinder umfasst, der in der Betriebsposition elektrisch leitend mit den Leitungsdrähten verbunden ist, wobei die mechanische Kupplung (2) einen Befestigungsabschnitt (25) aufweist, der ausgebildet ist, in der Betriebsposition den elektrischen Verbinder positionsfest zu halten.

16. System nach einem der vorangehenden Ansprüche,
**dadurch gekennzeichnet, dass**
die Kratzfeder (3) elektrisch leitfähig ausgebildet ist, wobei die Kratzfeder (3) in der Betriebsposition über einen Abschnitt, mit dem sie an der Tragschienenseitenwand anliegt, mit der Tragschienenseitenwand elektrisch leitend verbunden ist, wobei insbesondere in der Betriebsposition die Tragschienen (1) mittels der mechanischen Kupplung (2) elektrisch leitend verbunden sind.

17. Mechanische Kupplung (2) des Systems nach einem der Ansprüche 1 bis 16,
**dadurch gekennzeichnet, dass**
die mechanische Kupplung (2) eine erste und eine zweite Kupplungsseitenwand (21, 22) umfasst, die insbesondere durch eine Kupplungsbrücke (23) verbunden sind, wobei die mechanische Kupplung (2) zumindest eine aus einer Ruhelage federelastisch auslenkbare Kratzfeder (3) aufweist, die an zumindest einer der Kupplungsseitenwände (21, 22) angeordnet ist.

18. Leuchte hergestellt mit einem System nach einem der vorangehenden Ansprüche 1 bis 16,
**dadurch gekennzeichnet, dass**
sich das System in der Betriebsposition befindet.

19. Verfahren zur Herstellung einer Leuchte nach Anspruch 18 mit einem System nach einem der Ansprüche 1 bis 16,
**dadurch gekennzeichnet, dass**
ausgehend von einer Montageposition der mechanischen Kupplung (2) und der ersten Tragschiene (1), in der die mechanische Kupplung (2) an einem Längsende der ersten Tragschiene (1) positionsfest fixiert ist, zum Herstellen der Leuchte die zweite Tragschiene mittels einer Fügebewegung positionsfest an der mechanischen Kupplung (2) fixiert wird unter federelastischer Auslenkung einer der mechanischen Kupplung (2) zugeordneten Kratzfeder (3) zur Fixierung der Längsenden der beiden Tragschienen (1) relativ zueinander über die mechanische Kupplung (2).
